(19) Europäisches Patentamt
European Patent Office
Office européen des brevets

(11) EP 3 701 790 B1

# (12) EUROPEAN PATENT SPECIFICATION

(45) Date of publication and mention of the grant of the patent:
**20.10.2021 Bulletin 2021/42**

(51) Int Cl.:
***A01G 24/60*** *(2018.01)*

(21) Application number: **20156710.4**

(22) Date of filing: **11.02.2020**

## (54) PLANT CULTIVATING METHOD AND PLANT CULTIVATING APPARATUS

PFLANZENZUCHTVERFAHREN UND PFLANZENZUCHTVORRICHTUNG

PROCÉDÉ ET APPAREIL DE CULTURE DE PLANTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2019 JP 2019032507**

(43) Date of publication of application:
**02.09.2020 Bulletin 2020/36**

(73) Proprietor: **Ricoh Company, Ltd.**
**Tokyo 143-8555 (JP)**

(72) Inventors:
- **KAMATA, Hisahiro**
  **Ebina-city, Kanagawa 243-0460 (JP)**
- **TAKAHASHI, Fumihito**
  **Tokyo 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(56) References cited:
**EP-A2- 1 435 201**
**JP-A- 2004 187 540**
**JP-A- 2004 187 540**
**KR-A- 20150 071 956**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the Invention

The present invention relates to a plant cultivating method and a plant cultivating apparatus.

2. Description of the Related Art

When appropriate conditions are satisfied, seeds of plants start water absorption, breathing, energy generation, cell division, and cell elongation and germinate. However, problems arise in that some plants become a sleeping state at the stage of seeds and do not germinate or some individual seeds exhibiting slow growth exist due to insufficient nutrient elements and difference in activation of bacteria and individual cells even when the seeds germinate.

Therefore, for example, as a method for generating nitrogen, which is essential for plant growth after germination, a method for generating nitrogen-containing compound that plants can use from nitrogen in the air by generating plasma has been developed (for example, refer to Japanese Unexamined Patent Application Publication No. 2017-228423) .

For example, a method for adding a solution containing phosphorous acid after the germination of a plant seed has been also developed (for example, refer to Japanese Unexamined Patent Application Publication No. 2004-187540).

An object of the present invention is to provide a plant cultivating method that can improve a germination ratio of plant seeds and can accelerate growth of the plants after germination.

SUMMARY OF THE INVENTION

According to an aspect of the present invention, a plant cultivating method includes: applying a voltage of 4 kV or more and 15 kV or less to a culture material not including phosphorus at a frequency of 0 Hz or more and 200 kHz or less; sowing a seed of a plant in the culture material after the applying; and adding phosphorus to the culture material within 7 days from germination of the seed of the plant.

According to an aspect of the present invention, the plant cultivating method that can improve a germination ratio of plant seeds and can accelerate the growth of the plants after germination can be provided.

BRIEF DESCRIPTION OF THE DRAWINGS

FIG. 1 is a schematic view illustrating the relation between voltage and current at the time of applying load;
FIG. 2 is an explanation view illustrating control of a ratio of the amount of negative ion and the amount of ozone;
FIG. 3 is a schematic view of a plant cultivating apparatus used in a first embodiment of the present invention;
FIG. 4 is photographs illustrating the progression of growth of Salad Bowl Red using the first embodiment of the present invention;
FIG. 5A is a photograph illustrating tap water allowed to stand for 30 days after voltage application;
FIG. 5B is an enlarged photograph of FIG. 5A;
FIG. 6 is a graph illustrating the relation between the number of days for which tap water is allowed to stand after voltage application and the number of bacteria;
FIG. 7A is a photograph illustrating a state of the root of double camellia after voltage application;
FIG. 7B is an enlarged photograph of FIG. 7A;
FIG. 8 is a schematic view of a plant cultivating apparatus used in a second embodiment of the present invention;
FIG. 9 is a view illustrating chemical reaction before nitrate nitrogen is generated by generation of plasma ion;
FIG. 10 is a schematic view illustrating a preferable range of the content of nitrate nitrogen in a growth process of plants;
FIG. 11A is a graph illustrating the relation between the amount of the plasma ion and the weight of plants after 30 days from seed sowing;
FIG. 11B is a graph illustrating the relation between the concentration of nitrate nitrogen and the number of elapsed days after voltage application;
FIG. 12 is a schematic view of a plant cultivating apparatus used in a fourth embodiment of the present invention;
FIG. 13 is a schematic view illustrating a dielectric material barrier discharge method;
FIG. 14 is a schematic view of a plant cultivating apparatus used in Modification Example 1 of the fourth embodiment of the present invention;

FIG. 15 is a schematic view illustrating a seed housing portion in the plant cultivating apparatus according to the present invention;

FIG. 16 is a schematic view illustrating a plant cultivating apparatus used in a sixth embodiment of the present invention;

FIG. 17 is a schematic view of a plant cultivating apparatus used in a seventh embodiment of the present invention;

FIG. 18A is a photograph of the root of Great Lakes cultivated in the plant cultivation container in which ozone is generated; and

FIG. 18B is a photograph of the root of Great Lakes cultivated in a plant cultivation container in which ozone is not generated.

The accompanying drawings are intended to depict exemplary embodiments. Identical or similar reference numerals designate identical or similar components throughout the various drawings.

DESCRIPTION OF THE EMBODIMENTS

The terminology used herein is for the purpose of describing particular embodiments only.

As used herein, the singular forms "a", "an" and "the" are intended to include the plural forms as well, unless the context clearly indicates otherwise.

An embodiment of the present invention will be described in detail below with reference to the drawings.

Plant cultivating method and plant cultivating apparatus

A plant cultivating method according to a first embodiment of the present invention includes a voltage applying step of applying a voltage of 4 kV or more and 15 kV or less to a culture material not including phosphorus at a frequency of 0 Hz or more and 200 kHz or less, a sowing step of sowing plant seeds in the culture material after the voltage applying step, and phosphorus addition step of adding phosphorus to the culture material within 7 days for germination of the plant seeds and further includes other steps, if necessary.

A plant cultivating apparatus used for the plant cultivating method according to the first embodiment of the present invention includes a voltage applying unit that applies a voltage of 4 kV or more and 15 kV or less to a culture material not including phosphorus at a frequency of 0 Hz or more and 200 kHz or less, a sowing unit that sows plant seeds in the culture material, and a phosphorus addition unit that adds phosphorus to the culture material within 7 days from germination of the plant seeds and further includes other units, if necessary.

A plant cultivating method to a second embodiment of the present invention includes a germination step of sowing plant seeds in a culture material to germinate, and a growth step of growing the plants after germination, in which in the germination step and the growth step, a voltage of 4 kV or more and 15 kV or less is applied to at least one of the culture material except seeds or plants after germination and gas surrounding the culture material at a frequency of 0 Hz or more and 200 kHz or less with the culture material as reference potential, and includes other steps, if necessary.

A plant cultivating apparatus used for the plant cultivating method according to the second embodiment of the present invention includes a germination unit that sows plant seeds in a culture material to germinate, and a growth unit that grows the plants after germination, in which in germination and growth by the germination unit and the growth unit, a negative voltage of 4 kV or more and 15 kV or less is applied to at least one of the culture material except seeds or plants after germination and gas surrounding the culture material at a frequency of 0 Hz or more and 200 kHz or less with the culture material as reference potential, and includes other unit, if necessary.

The conventional arts have not considered improvement in the germination ratio of plant seeds and acceleration of the growth of the plants after germination as the problem to be solved and have not included the step of applying voltage to the culture material and the step of adding phosphorus after germination of the plant seeds. Consequently, a problem arises in that the germination ratio of the plant seeds cannot be improved or the growth of the plants after germination cannot be accelerated.

Plant cultivating method and plant cultivating apparatus according to first embodiment

The plant cultivating method according to the first embodiment of the present invention includes the voltage applying step, the sowing step, and the phosphorus addition step and further includes other steps, if necessary.

The plant cultivating apparatus used in the plant cultivating method according to the first embodiment of the present invention includes the voltage applying unit, the sowing unit, and the phosphorus addition unit, and further includes other units, if necessary.

Voltage applying step and voltage applying unit

The voltage applying step is a step of applying a voltage of 4 kV or more and 15 kV or less to the culture material not including phosphorus at a frequency of 0 Hz or more and 200 kHz or less and is carried out by the voltage applying unit.

- Culture material -

The culture material is not particularly limited as long as the culture material can cultivate plants and can be appropriately selected depending on the purpose. Examples of the culture material include a culture medium and a culture soil. In the case of the culture medium, the culture medium can be used by soaking the culture medium in sponge, agar, soil, synthetic minerals, and bog moss.

The culture material preferably not includes phosphorus and not includes nitrogen.

Examples of the components of the culture material include nitrogen, potassium, magnesia, manganese, boron, and other components except phosphorus. These components may be used singly or in combination of two or more of them.

In the culture material, phosphorus is not included. Use of the culture material not including phosphorus allows the delay of the germination of plant seeds (the plants become in a sleeping state) to be prevented.

At the time of sowing the plant seeds, the seeds become in the sleeping state and the germination delays when the culture material includes phosphorus and potassium (in particular, phosphorus). In this regard, the above phenomenon is similar to a phenomenon in which germination does not occur when fruity flesh attaches to the seed. Therefore, the germination of seed, that is, rooting is not accelerate, and thus symbiotic bacteria living symbiotically on the roots of plants are difficult to proliferate and nutrients essential for growth (nitrogen, potassium, magnesia, manganese, boron, and other components) are not decomposed by the symbiotic bacteria. Therefore, the nutrients are not carried into the cells of the plants and thus the growth further delays.

The main nutrients except phosphorus are preferably not included from the sowing to the germination of the seeds. This is because necessary nutrients are provided in the seeds from the sowing to the germination of the seeds in the case of angiosperms. The seeds in the culture material not including the nutrients are sown, whereby the possibility of attaching various bacteria to the seeds decreases.

Examples of the nutrients include macronutrients and micronutrients. The macronutrient refers to a nutrient of which required amount for plants is 0.2% by mass or more relative to the dried amount of the plant tissue, whereas the micronutrient refers to a nutrient of which required amount for the plants is 0.2% by mass or less relative to the dried amount of the plant tissue.

Examples of the macronutrient include a primary macronutrient and secondary macronutrient.

Examples of the primary macronutrient include carbon, hydrogen, oxygen, nitrogen, phosphorus, and potassium. The forms of carbon, hydrogen, and oxygen to be absorbed by plants are carbon dioxide and water in the atmosphere. Therefore, carbon, hydrogen, and oxygen do not need to exist in a soil or a culture medium as inorganic salts in the growth of plants. Nitrogen, phosphorus, and potassium are referred to as three elements of a fertilizer.

The carbon is an essential constituent for organic substances. Examples of the organic substances include proteins, sugars, lipids, and nucleic acids. The organic substances are essential for the structure and function of the cells and tissues of creatures. In the case of plants, starch and cellulose are the organic substances that are important and rich in plant bodies. The major carbon source is carbon dioxide in the atmosphere. The taken carbon dioxide is converted into hydrocarbons and thereafter, the obtained hydrocarbons become a material for various organic substances.

The hydrogen constitutes water and organic substances. The concentration gradient of hydrogen ions (protons) in cells is required for transporting electrons for photosynthesis and breathing.

The oxygen constitutes oxygen molecules, water, and carbon dioxide and these are necessary for the breathing of the cells of plants. The breathing of cells is biochemical reaction that consumes sugar and synthesizes adenosine triphosphoric acid (ATP) serving as the energy of creatures. By photosynthesis, the sugar serving as a substrate for ATP synthesis is synthesized and oxygen molecules are discharged out of the plant body as a byproduct. Oxygen is required at the time of decomposing the sugar.

The nitrogen acts on significant growth of plants and in particular enlarges leaves and stems and thus is also called a leaf fertilizer. Among the essential nutrients absorbed from the root, nitrogen is required in the largest amount. The content of nitrogen that plants can use in a soil is considered to be a major factor for determining the productivity of the plants. Plants have nitrogen compounds in an amount of the dried weight of the protoplasm of plants of 40% by mass to 50% by mass. Among plants, plants of which leaves and stems are used as foods particularly require a large amount of nitrogen. Examples of the form of nitrogen in a soil include an inorganic form and an organic form. Examples of the inorganic form include ammonium ion and nitrate ion. The ammonium ion is converted into nitrous acid by nitrite bacteria. Examples of the organic form include biomass and organic substances in a soil. The organic nitrogen directly usable for plants is in the form of the associated inorganic form and humus. The organic form except the humus cannot be used for plants as long as the organic form is converted into the inorganic form by microorganisms.

The phosphorus is the components of phospholipids forming nucleic acids and cell membranes. Phosphorus also constitutes adenosine triphosphoric acid serving as the energy of creatures, ribulose-1,5-bisphosphate involved in photosynthesis, and 1,4,5-triphosphoinositol that is a second messenger cut out from phosphatidyl-4,5-bisphosphoinositol in cell membranes by a phospholipid degrading enzyme. The intermediates (glucose-1-phosphate and fructose-6-phosphate) of a glycolytic system, a TCA cycle, and a pentose phosphate pathway also include phosphorus.

The potassium functions as an inorganic salt dissolved in a biological fluid of plants in the plant bodies. Potassium ion is a major cation in the cells of plants and has the highest concentration in the plants among the cations. The roles of potassium in the plant bodies are water potential in cells and formation of the ion appropriate for metabolic reaction. The transfer of potassium ions to the other cell through ion channels causes reduction of the water potential of this cell and transfer of water occurs. Plants lower the water potential of leaves than that of the roots and thus absorb water depending on this difference.

Examples of the secondary macronutrient include calcium, sulfur and magnesium.

The calcium relates to, for example, the control of the transfer of other nutrients, the activation of specific enzymes, and photosynthesis. The important role of calcium is mainly communication in cells as a second messenger. Calcium is also important for development of the root as roles of cell division, cell elongation, and detoxification of hydrogen ion. Other functions of calcium are the neutralization of organic acids, the inhibition of several types of ions activated by potassium, and the involvement of nitrogen uptake.

The sulfur is a constituent of amino acids such as methionine, cysteine, and cystine. These amino acids constitute, for example, glutathione, sulfolipids, coenzymes, vitamins, phytochelatin, metallothionein, and thioredoxin.

The magnesium is important for biochemical reaction including protein synthesis, the glycolytic system, the TCA cycle, and a nitrogen metabolism system. Magnesium bonds to phosphate compounds to be involved in enzyme reaction. Examples of the enzyme to which magnesium is involved include RNA polymerase, ATP degrading enzymes, protein kinase, phosphatase, glutathione synthase, and carboxyltransferase. Magnesium is bonded to the phosphate groups on cell membranes and the surface layer of liposome to maintain the stereostructure of thereof.

Examples of the micronutrient include chlorine, boron, manganese, iron, zinc, copper, molybdenum, and nickel.

The chlorine is an element universally existing in the environment. About 100 mg/kg of chlorine is included in a soil and chlorine exists as chloride ions. Chlorine is difficult to be adsorbed into soil particles and transfers with water. The important role of chlorine is opening and closing of stomata. The stomata are opened or closed by change in osmotic pressure associated with the transfer of potassium ions and the chloride ions are used as counterions of the potassium ions. The elongation growth and division of cells occur due to the inflow of the chloride ions to cells. Increase in the chloride ions causes organic acid ions to be used more for plant growth.

The boron is a constituent of cell walls and the most important micronutrient for plants. In the cell division, boron is required for sugar transportation, the synthesis of specific enzymes, the uptake of calcium, and the use of calcium (membrane functions, germinate of pollen, cell elongation, cell differentiation, and metabolism of carbohydrate). Boron exists as boric acid in a soil.

The manganese is included in healthy leaves in an amount of several tens of mg/kg to several hundreds of mg/kg. A content of manganese equal to or less than 10 mg/kg to 20 mg/kg results in causing deficiency disease. The soil that causes Mn deficiency has high pH or is a soil to which a large amount of compost is added. In a soil having a significant amount of organic substances, the activity of Mn oxidation bacteria becomes high and Mn ion is converted into insoluble manganese dioxide ($MnO_2$) when the pH becomes 6.5. In such a soil, the deficiency disease may occur even when the Mn concentration is high.

The iron is involved in oxidation-reduction reaction in a living body. In the oxidation-reduction reaction, an iron ion forms a coordination bond with nitrogen, oxygen, and sulfur to donate or accept electrons to the element to be bonded. Iron is a cofactor essential for activity for many enzymes and, for example, is required for photosynthesis, oxygen breathing, detoxification of active oxygen species, nitrogen fixation, and reduction of nitric acid.

The zinc is a cofactor for 80 or more of plant enzymes and forms a zinc finger. Different from many essential transition metal elements, zinc functions to maintain a bond to a substrate and a stereostructure more than donation and acceptance of electrons. Examples of the action of the enzymes containing zinc include the metabolism of auxin serving as a plant growth hormone, photosynthesis, and DNA replication. A zinc-dependence carbonic anhydrase supplies carbon dioxide serving as the substrate of photosynthesis from carbonic acid in a plant body at chloroplast stroma.

The copper is important for the oxidation-reduction reaction in a living body and photosynthesis. Copper is also required for many enzyme reactions, the synthesis of lignin serving as a cell wall component, and the production of grains.

The molybdenum functions as a constituent of cofactors in cells of plants. Examples of the cofactors include nitrate reductase, aldehyde oxidase, sulfite oxidase, xanthine oxidase, and xanthine dehydrogenase. Molybdenum is responsible for electron transmission by bonding to a molybdenum cofactor among the cofactors.

The nickel is required as an activator of urease that decomposes urea in the metabolism of nitrogen. Shortage of nickel in plants results in accumulating urea that is toxic for plants and causes necrosis. Nickel also acts as alternative of zinc and iron as the cofactors of a part of enzymes.

Shortage or excess of the nutrients may cause disorder of the living bodies of plants. When the specific nutrient is in a low level, the existence amount of other essential nutrients becomes relatively larger. Consequently, the disorder caused by excessive other essential nutrients may occur.

The nutrients are taken up to epidermal cells through a proton pump of root hair cells. The proton pump of the root hair cells supplies hydrogen ions to negatively charged soil particles and takes up the nutrients that are cations of inorganic salts to the plant bodies by energy generated at the time of hydrogen ion supply. In particular, the root hair significantly contributes to the absorption of potassium. However, the root hair is not involved with the uptake of all nutrients and hardly contributes to absorption of calcium. Sites of the root except the root hair also absorb the nutrients. For example, the tip of the root hair takes up phosphoric acid.

Examples of a method in which plants take up the nutrients to the epidermal cells include simple diffusion, passive transport, and active transport.

The simple diffusion is diffusion motion that occurs in accordance with concentration gradient of nonpolar molecules such as oxygen, carbon dioxide, and ammonia and penetrates a lipid bilayer on a cell membrane not through a transport protein.

The passive transport is the transfer of a solute or ions in the solute from a high concentration side to a low concentration side by the transport protein. The passive transport is controlled by the water potential inside plants. In the case where the water potential inside the plants is negative relative to the water potential in a soil, the concentration of inorganic salts serving as the nutrients is higher in the soil than inside the plants. This leads to inflow of the nutrients to the plants.

The active transport is the transfer of ions and molecules from the low concentration side to the high concentration side caused by the transport protein with energy being consumed. The cell walls of plants have a negative difference in potential of -100 mV to -150 mV when the ion concentration is in equilibrium between the outside and inside of the cells. Here, the negative potential exists inside the cells and the positive potential exists outside the cells. This membrane potential is mainly generated by the equilibrium of ion transport caused by the proton pump and the potassium channel.

Examples of the active transport include primary active transport and secondary active transport.

The primary active transport is active transport using adenosine triphosphoric acid as the supply source of energy.

The secondary active transport is active transport using energy generated by concentration difference (electrochemical potential difference) of charged ions such as proton and potassium ion between outside and inside the cells.

The content of the nitrogen is not particularly limited and can be appropriately selected depending on the purpose. The concentration is preferably 0.5% by mass or more and 5.0% by mass or less relative to the culture material.

The content of the potassium is not particularly limited and can be appropriately selected depending on the purpose. The concentration is preferably 1.0% by mass or more and 5.0% by mass or less relative to the culture material.

The content of the manganese is not particularly limited and can be appropriately selected depending on the purpose. The concentration is preferably 0.001% by mass or more and 0.01% by mass or less relative to the culture material.

The content of the boron is not particularly limited and can be appropriately selected depending on the purpose. The concentration is preferably 0.001% by mass or more and 0.01% by mass or less relative to the culture material.

Examples of the other components include water, vitamin, sulfur, iron, manganese, molybdenum, zinc, copper, and chlorine.

- Voltage -

The voltage is 4 kV or more and 15 kV or less. From the viewpoint of prevention of proliferation of various bacteria and prevention of excessive generation of ozone, the voltage is preferably 6 kV or more and 15 kV or less. The voltage of 6 kV or more allows radical species to be generated due to relation between a discharging distance and voltage of accelerating molecules based on Paschen's law in the case where electrodes are not subjected to special treatment (material, fineness, and gas injection) and environment is under atmosphere pressure. In the case where the voltage is 4 kV or less, ions can be generated but the radical species cannot be generated. Application of voltage to the culture material generates ions and radical groups. For example, $H^+$ and $OH^-$ are generated by decomposing a water molecule.

The culture material does not include a bactericide or the like and thus proliferation of various bacteria that inhibit the germination of seeds and growth of plants cannot be prevented. However, the culture material not including the bactericide and various bacteria that are attached to the seeds and are not necessary for growth are sterilized by applying voltage into the culture material to generate the ions and the radical groups and thus the germination of the seeds and the growth of the plants are accelerated. The surfaces of the seeds are hydrophilized by the ions and the radical groups and thus the germination of the seeds and the growth of the plants are accelerated.

The voltage is not particularly limited and can be appropriately selected depending on the purpose. Examples of the voltage include alternating-current voltage and direct-current voltage. Among them, the alternating-current voltage is preferable from the viewpoint that the inside of the culture material can be hydrophilized. This is because the alternating-current voltage alone can pass inside the dielectric material. In the dielectric material, the seeds of plants are also included.

The frequency at the time of applying the alternating-current voltage is more than 0 Hz and 200 kHz or less and preferably 8.64 kHz (frequency of geomagnetism) or more and 140 kHz or less. An oscillating circuit, a switching circuit, and a smoothing rectifier circuit are unnecessary by synchronizing the frequency at the time of applying voltage with the frequency of the geomagnetism and thus the electric power consumption can be reduced.

Application of the direct-current voltage to the culture material is not particularly limited and can be appropriately selected depending on the purpose. Examples of the direct-current voltage include positive voltage and negative voltage.

The voltage is preferably applied until the pH of the culture material after the voltage application becomes 5 or more and 8 or less. This pH is relatively higher than the pH range appropriate for the cultivation of plants. By this operation, addition of phosphoric acid to the culture material at the time of adding phosphorus after germination lowers pH by about 1 and the final pH of the culture material is suitable pH for the cultivation of plants (refer to National Federation of Agricultural Cooperative Associations Fertilizer and Agriculture Department Soil Diagnosis Guide, Page 5)

In the case where the pH of the culture material before the voltage application is neutral, the pH of the culture material becomes basic due to effect of trace amount of dissolved light metals by applying the voltage. Continuous application of the voltage thereafter causes decomposition of water. $OH^-$ alone is used for generation of secondary radical and $H^+$ alone remains. Consequently, the culture material becomes acidic.

The method for applying the voltage to the culture material is not particularly limited and can be appropriately selected depending on the purpose. Examples of the method include a method for placing the first electrode and the second electrode in the culture material and applying the voltage between the first electrode and the second electrode. A dielectric material barrier discharge method in which a dielectric material is placed between the first electrode and the second electrode is preferable. Application of the voltage by the dielectric material barrier discharge method allows streamer discharge to be generated.

Sowing step and sowing unit

The sowing step is the step of sowing the plant seeds to the culture material and is carried out by the sowing unit.

- Plants-

The plants are not particularly limited and can be appropriately selected depending on the purpose. Examples of the plants include Salad Bowl Red, Boston Lettuce, Garland Chrysanthemum, Pinot Green, Great Lakes, Bean Sprout, Lettuce, Spinach, Herbs, Tomato, Cucumber, Green Pepper, and Strawberry.

Examples of the method for sowing the plant seeds include broadcast sowing, spaced sowing, and stripe sowing.

A time from after the voltage application to the culture material to the sowing of the plant seeds is 30 minutes or less and from 5 minutes to 15 minutes is preferable. Zero minute is more preferable from the viewpoint of workability. The application of the voltage causes generation of ozone, other radical groups, and the like in the culture material. The generation of ozone and other radical groups allows the germination and rooting to be accelerated, growth after the germination to be accelerated, and healthy plants to be cultivated. In the stage of germination and rooting, bacteria that are not necessary for the germination are sterilized by ozone. In the stage of growth, nitrate nitrogen (measured as a group of nitrogen compounds) is generated as one of the radical groups except ozone. The nitrate nitrogen is generated by not the first radical species but the second radical species. This compound contributes to growth (Study on Reaction Process of Atmospheric-Pressure Streamer Discharge by Measuring Active Chemical Species Using Laser Spectroscopy, Ono Ryo, Graduate School of Frontier Sciences, The University of Tokyo).

As illustrated in FIGS. 18A and 18B, as a result of applying 50 mg/h of ozone into the culture material for 2 hours using an air stone and growing Great Lakes, acceleration of germination, rooting, and growth is confirmed. Consequently, the healthy plant can be cultivated in a short cultivation period. At the harvest time of this Great Lakes, ozone disappears and no harm for this Great Lakes is confirmed. From these results, it is clear that the application of ozone to the culture material before sowing the seeds of Great Lakes results in accelerating the germination, rooting, and growth of Great Lakes.

With regard to the ozone, except the method for generating ozone by applying the voltage to the culture material, a method for apply the voltage to gas to generate ozone in the gas and dissolving the gas in which ozone is generated using an air stone, nano bubbles, and an ion exchange membrane (for electrolytic method) is included.

The duration of the radical groups except ozone generated in the culture material after the voltage is applied to the culture material is a short period of several milliseconds and cannot be maintained for several tens of minutes even in a state where ozone is dissolved in water (Study on Reaction Process of Atmospheric-Pressure Streamer Discharge by Measuring Active Chemical Species Using Laser Spectroscopy, Ono Ryo, Graduate School of Frontier Sciences, The University of Tokyo).

Phosphorus addition step and phosphorus addition unit

The phosphorus addition step is a step for adding phosphorus to the culture material after the germination of the plant seeds and is carried out by the phosphorus addition unit.

The germination is synonymous with rooting of the plant seed.

The plant seeds are allowed to stand for two weeks under an environment at 4°C (in a constant-temperature chamber) and allowed to stand under an environment at 14°C, resulting in no germination. It has been well-known that timing of germination, a growth period, blossoming, and fruition are determined by the feature that the plants originally have, change in the amount of sunlight, change in temperature, and growth action determined by the period from winter to spring or summer to autumn. Therefore, cultivation and harvest can only be achieved in a fixed number of times and fixed periods per year.

The amount of phosphorus to be added is not particularly limited and can be appropriately selected depending on the purpose. The amount is preferably 50 ppm or more and 450 ppm or less and preferably 200 ppm or more and 300 ppm or less.

The addition is preferably carried out within 7 days after the germination of the plant seeds and more preferably within 3 days from the viewpoint of growth of the plants. The number of times of additions of phosphorus may be one time or may be several times. Providing phosphorus to the culture medium allows phosphorus, which is essential for the growth of the plants after germination, to be taken up by the plants.

The addition of phosphorus is not particularly limited and can be appropriately selected depending on the purpose. The phosphorus is preferably added in the form of phosphoric acid from the viewpoint of control of pH of the culture material.

Plant cultivating method and plant cultivating apparatus according to second embodiment

The plant cultivating method according to the second embodiment of the present invention includes a germination step and a growth step, in which in the germination step and the growth step, a voltage of 4 kV or more and 15 kV or less is applied to at least one of the culture material except the seeds or the plants after germination and gas surrounding the culture material at a frequency of 0 Hz or more and 200 kHz or less with the culture material as reference potential, and includes other steps, if necessary.

The plant cultivating apparatus used for the plant cultivating method according to the second embodiment of the present invention includes a germination unit and a growth unit, in which in germination and growth by the germination unit and the growth unit, a negative voltage of 4 kV or more and 15 kV or less is applied to at least one of the culture material except the seeds or the plants after germination and gas surrounding the culture material at a frequency of 0 Hz or more and 200 kHz or less with the culture material as reference potential, and includes other units, if necessary.

Germination step and germination unit

The germination step is a step for sowing plant seeds in the culture material, applying the voltage to at least one of the culture material except the seeds and gas surrounding the culture material with the culture material as reference potential to germinate and is carried out by the germination unit.

- Culture material -

The culture material is not particularly limited and can be appropriately selected depending on the purpose. Examples of the culture material include a culture material made by adding phosphorus to the culture material used in the method according to the present invention.

- Plant -

The plants are not particularly limited and can be appropriately selected depending on the purpose. Examples of the plants include the same plants as the plants exemplified in the first embodiment of the present disclosure.

- Gas -

The gas is not particularly limited and can be appropriately selected depending on the purpose. Examples of the gas include the atmospheric air.

- Voltage -

The voltage is 4 kV or more and 15 kV or less. From the viewpoint of prevention of proliferation of various bacteria and prevention of excessive generation of ozone, the voltage is preferably 6 kV or more and 10 kV or less.
The voltage is not particularly limited and can be appropriately selected depending on the purpose. Examples of the voltage include alternating-current voltage and direct-current voltage. Among them, the alternating-current voltage, which is directly applied to cells, is preferable because the target object to which the voltage is applied is an organic matter and a dielectric material.
The frequency at the time of applying the alternating-current voltage is more than 0 Hz and 200 kHz or less and preferably 8.64 kHz (frequency of geomagnetism) or more and 140 kHz or less. An oscillating circuit, a switching circuit, and a smoothing rectifier circuit are unnecessary by synchronizing the frequency at the time of applying voltage with the frequency of the geomagnetism and thus the electric power consumption can be reduced. By repeatedly applying positive voltage and negative voltage to the gas using the alternating-current voltage, the gas is negatively charged and negative ions and radical species are generated.
The positive voltage and the negative voltage have time when the direction of electrons is inverted at the time of alternation and both voltages can be used.
SDF (fixing technology by streamer discharge) refers to the high-voltage alternating-current voltage in which the positive voltage part is high and alternation is carried out.
In the voltage application method, resonant energy is applied to a load by the parallel resonance of the load of a dielectric material and the output inductance of a transformer. The negative voltage part is electric power-returned to the input voltage and thus is linearly smoothed. In SDF, the applied voltage is both positive voltage and negative voltage and thus negative ions and positive ions (for example, ozone) are simultaneously generated.
Therefore, the action of the negative ions and the action of ozone are simultaneously affected as one action effect.
From the direction of the current when the voltage is applied to air or water, $S_1$ and $S_4$ (oblique line area in FIG. 1) indicate the charge and discharge of the negative ions and contribute to generation of the nitrate nitrogen.
$S_2$ and $S_3$ indicate the charge and discharge of the positive ions and contribute to generation of ozone.
With respect to a high voltage power source for the negative ions and ozone, direct-current voltage is generated and discharge (discharging due to ripple voltage difference of output voltage and generating static electrical charge) utilizing the feature of a load impedance discharge material occurs.
As units that control the ratio of the amount of the negative ions and the amount of ozone, a plurality of units can be considered. A unit illustrated in FIG. 2 will be described.
Signs in FIG. 2 represent the following meaning.

$V_{OUT}$: Voltage applied to a load (air or water)
$I_{OUT}$: Current flowing through the load (air or water)
$S_1$: Area of $I_{OUT}$ in $T_1$ period (to negative voltage $\leq V_{OUT} = 0$)
$S_2$: Area of $I_{OUT}$ in $T_2$ period ($V_{OUT} > 0$ and to $I_{OUT} = 0$)
$S_3$: Area of $I_{OUT}$ in $T_3$ period ($V_{OUT} > 0$ and to $V_{OUT} = 0$)
$S_4$: Area of $I_{OUT}$ in $T_4$ period ($0 = V_{OUT} >$ negative voltage)

The vertical lines in which $V_{OUT}$ in FIG. 2 intersects with 0 V are determined to be M1 and M2 (M1 < M2). By moving the horizontal line intersecting with 0 V of $V_{OUT}$ in a lower direction (direction of lower voltage), M1 becomes M11 and M2 becomes M12. At the same time, $S_1$ becomes $S_{11}$ and $S_4$ becomes $S_{41}$ and thus the area is enlarged. At the same time, $S_2$ becomes $S_{21}$ and $S_3$ becomes $S_{31}$ and thus the area is shrunk. As described above, the amount ratio of the amount of the negative ions and the amount of ozone can be controlled and thus the method and the apparatus can be used for applications in other industries except agricultural industry.
In FIG. 1, the role of the voltage and current is to generate negative ions and positive ions in the case where the voltage is applied to air or water.
The control of the applied electric power amount will be described.
A power function P(T) is a product of $V_{OUT} \cdot I_{OUT}$ applied to air or water and thus output voltage V(T) of parallel resonance in an ideal state can be represented by the following formula (1).

$$V(T) = V_{OUT}Sin(\omega T) \qquad (1)$$

(here, $V_{OUT}$ is a maximum value (V) and $\omega$ represents an angular frequency. $\omega$ has relation of $\omega = 2\Pi F_0$ to a resonance frequency $F_0$ in a LC resonance state)

Therefore, resonance angular frequency $\omega_0$ in the resonance state is represented by the following formula (2) .

$$\omega_0^2 = 1/LC \qquad (2)$$

An output current I(T) is represented by the following formula (3).

$$I(T) = I_{OUT}Cos(\omega T) \qquad (3)$$

This represents that the phase of (2) gains 1/2Π rad to the phase of (1).

Therefore, the product of the formula (1) and the formula (2) (electric power P(T)) is applied to an output load C.

From the addition theorem of trigonometric functions, the electric power P(T) is represented by the following formula (4).

$$P(T) = V_{OUT}Sin(\omega T) \cdot I_{OUT}Cos(\omega T)$$

$$= V_{OUT} \cdot I_{OUT} \cdot (Sin(\omega T + \omega T) + SIN(\omega T - \omega T))/2$$

$$= ((V_{OUT} \cdot I_{OUT} \cdot SIN(2\omega T))/2) \qquad (4)$$

Therefore, the maximum value $P_{MAX}$ of the output electric power is represented by the following formula (5)

$$P_{MAX} = V_{OUT} \cdot I_{OUT}/2 \qquad (5)$$

The maximum value $P_{MAX}$ does not reach $V_{OUT} \cdot I_{OUT}/2$ or more.

The maximum electric power value and the minimum electric power value correspond to $(T_1 + T_2)/2$ and $(T_3 + T_4)/2$ in FIG. 2, respectively.

Therefore, the load is impedance and in order to derive a substantial loss, apparent electric powers corresponding to the electric powers generating the negative ions are determined to be $W_1$ and $W_4$ and apparent electric powers corresponding to the electric powers generating ozone are determined to be $W_2$ and $W_3$, whereby the substantial electric power loss (RM) of emission (light, heat, and negative ion generation) contributing to the negative ion is represented by the following formula (6) .

$$RM = ||W_1| - |W_4|| \qquad (6)$$

The substantial electric power loss (RN) of emission (light, heat, and ozone generation) contributing to ozone is represented by the following formula (7).

$$RN = ||W_2| - |W_3|| \qquad (7)$$

Application of the direct-current voltage to the culture material is not particularly limited and can be appropriately selected depending on the purpose. Examples of the direct-current voltage include positive voltage and negative voltage. At the time of applying the direct-current voltage to the gas, the negative voltage is applied. By applying the negative voltage to the gas, the gas is negatively charged and the negative ions are generated.

With respect to the positive voltage of the direct current, the charge of the negative voltage gathers around the electrode of the positive voltage and thus the positive ions and the negative ions are not diffused in air.

The negative voltage of the direct current has a distance from the positive voltage insulated by air and the charge moves from the negative side to the positive side. Consequently, the charge does not gather near the electrode. Therefore, the negative ions are entirely diffused by a method for diffusing the negative charge in the air, constantly irradiating with LED lighting and circulating the air in a plastic water tank of 45 cm, and applying to air near the root for preventing the root rot of the plant due to an aqueous solution (applying for 5 minutes after every 55 minutes)

Examples of the method for applying the voltage include the dielectric material barrier discharge method and electromagnetic induction.

The electromagnetic induction is a method for applying the voltage by inducing the voltage from a coil due to the oscillation of an oscillator.

The coil is not particularly limited as long as the coil is an induction coil that can generate voltage by the electromagnetic induction. Examples of the coil include an air core coil and a high frequency coil. Among them, the air core coil is preferable.

Examples of the structure of the coil include a structure in which a plurality of conductors are wound from several hundred meters to several kilometers and the ends of the conductors are opened.

As the coil, a coil that can receive radio waves is preferable. This allows the induction of the voltage to the gas in the plant cultivation container to be controlled.

The oscillator is not particularly limited and can be appropriately selected depending on the purpose. Examples of the oscillator include a crystal oscillator and a ceramic oscillator.

The frequency of the oscillator is not particularly limited and can be appropriately selected depending on the purpose. Examples of the frequency include 8.64 kHz (geomagnetism). The oscillator oscillates at the frequency of the geomagnetism, whereby magnetic flux changes and thus the voltage is induced from the coil.

The coil is placed at the outer circumference of the plant cultivation area. Induction of the voltage from the coil due to the electromagnetic induction causes the application of the voltage to the gas filled in the plant cultivation container. The germination of the plant seeds in the plant cultivation area is accelerated by the negative ions generated in the gas to which the voltage is applied.

The number of the coils in the plant cultivation container is not particularly limited and can be appropriately selected depending on the purpose. A plurality of the coils are preferable. the more negative ions can be generated in the plant cultivation container by placing the coils over the plant cultivation area in addition to the outer circumference of the plant cultivation area.

The amount of the negative ions is preferably 500,000 ions/cc or more and 1,000,000 ions/cc or less based on measurement with an ion counter. The amount of the negative ions of 500,000 ions/cc or more and 1,000,000 ions/cc or less results in increasing the weight of the plants after 30 days from the sowing of the seeds.

Growth step and growth unit

The growth step is a step of growing the plants after germination by applying the voltage to at least one of the culture material except plants after germination and the gas surrounding the culture material with the culture material as reference potential and is carried out by the growth unit.

- Voltage -

The voltage is 4 kV or more and 15 kV or less. From the viewpoint of prevention of proliferation of various bacteria and prevention of excessive generation of ozone, the voltage is preferably 6 kV or more and 10 kV or less. The voltage of 4 kV or more can surely generate the radical species and the voltage of 15 kV or less prevents the generation of excessive secondary radical species. The voltage of 15 kV or more results in generating ozone alone.

The voltage is not particularly limited and can be appropriately selected depending on the purpose. Examples of the voltage include alternating-current voltage and direct-current voltage. Among them, the alternating-current voltage is preferable.

The frequency at the time of applying the alternating-current voltage is more than 0 Hz and 200 kHz or less and preferably 8.64 kHz (frequency of geomagnetism) or more and 140 kHz or less. An oscillating circuit, a switching circuit, and a smoothing rectifier circuit are unnecessary by synchronizing the frequency at the time of applying voltage with the frequency of the geomagnetism and thus the power consumption can be reduced. By repeatedly applying positive voltage and negative voltage to the gas by the alternating-current voltage, the gas is negatively charged and negative ions are generated.

Application of the direct-current voltage to the culture material is not particularly limited and can be appropriately selected depending on the purpose. Examples of the direct-current voltage include positive voltage and negative voltage.

At the time of applying the direct-current voltage to the gas, the negative voltage is applied. By applying the negative voltage to the gas, the gas is negatively charged and the negative ions are generated.

Examples of the method for applying the voltage include the electromagnetic induction.

The electromagnetic induction is a method for applying the voltage by inducing the voltage from a coil due to the oscillation of an oscillator.

The coil is not particularly limited as long as the coil is an induction coil that can generate voltage by the electromagnetic induction. Examples of the coil include an air core coil and a high frequency coil. Among them, the air core coil is preferable.

Examples of the structure of the coil include a structure in which a plurality of conductors are wound from several hundred meters to several kilometers and the ends of the conductors are opened.

As the coil, a coil that can receive radio waves is preferable. Therefore, the coil preferably has a large area. This allows magnetic flux to be interlinked and induction of the voltage to the gas in the cultivation container to be controlled.

The oscillator is not particularly limited and can be appropriately selected depending on the purpose. Examples of the oscillator include a crystal oscillator and a ceramic oscillator.

The frequency of the oscillator is not particularly limited and can be appropriately selected depending on the purpose. Examples of the frequency include 8.64 kHz (geomagnetism). The oscillator oscillates at the frequency of the geomagnetism, whereby magnetic flux changes and thus the voltage is induced from the coil.

The coil is placed at the outer circumference of the plant cultivation area. Induction of the voltage from the coil due to the electromagnetic induction causes the application of the voltage to the gas filled in the plant cultivation container. The growth of the plants in the plant cultivation area is accelerated by the negative ions generated in the gas to which the voltage is applied.

The number of the coils in the plant cultivation container is not particularly limited and can be appropriately selected depending on the purpose. A plurality of the coils are preferable. In addition to the outer circumference of the plant cultivation area, the coils are placed at the upper part of the plant cultivation area, whereby the negative ions can be generated in the plant cultivation container.

The amount of the negative ions is preferably 500,000 ions/cc or more and 1,000,000 ions/cc or less. The amount of the negative ions of 500,000 ions/cc or more and 1,000,000 ions/cc or less results in increasing the weight of the plants after 30 days from the sowing of the seeds.

Here, the embodiments of the plant cultivating method and the plant cultivating apparatus of the present invention will be described with reference to the drawings.

The plant cultivating apparatus according to the present invention is used for the plant cultivating method according to the present invention and thus the embodiment of the plant cultivating method according to the present invention will be described through the following description of the plant cultivating apparatus according to the present invention.

In each of the drawings, the same sign may be assigned to the same component part and duplicated description thereof may be omitted. The number, position, shape, and the like of the following component parts are not limited to the present embodiments and the preferable number, position, shape, and the like can be used for carrying out the present invention.

First embodiment

FIG. 3 is a schematic view illustrating one example of the plant cultivating apparatus used in the plant cultivating method according to the first embodiment of the present invention.

This plant cultivating apparatus 100 illustrated in FIG. 3 includes a plant cultivation container 110, a culture material 120, a gas 130, a first electrode 140a and a second electrode 140b.

As illustrated in FIG. 3, the electrodes 140a and 140b are placed in the culture material 120 formed of a culture medium not including phosphorus. Positive and negative voltage of 4 kV or more (preferably 6 kV or more) and 15 kV or less at a frequency of 0 Hz or more and 200 kHz or less is repeatedly applied between the electrode 140a and the electrode 140b. At this time, the voltage is applied until the pH of the culture medium reaches the range suitable for plants 150 to be grown (a pH of 5 or more and 7 or less). Thereafter, seeds are sown into the culture material 120 and phosphorus is added to the culture material 120 within 7 days after germination.

When phosphorus was added to the culture medium within 3 days after germination of the plants to cultivate the plants, the body length and weight of the plants after growth were increased.

Using the plant cultivating method according to the first embodiment, Boston Lettuce, Great Lakes, and Salad Bowl Red (Lettuce vegetables) were actually cultivated. To the culture medium not including phosphorus, a voltage of 8 kV was applied at an electric power of 35 W and a frequency of 22 kHz. After applying the voltage, the seeds of Boston Lettuce, Great Lakes, and Salad Bowl Red were sown. After 3 days from the germination of the seeds, 0.6% by mass of phosphoric acid was added to the culture medium to cultivate the plants.

As a result, a period from the sowing of the seeds to the germination was 1 day and a germination ratio was approximately 100%. In the case of a method of not using the plant cultivating method according to the first embodiment of the present invention (a common cultivating method), the period from the sowing of the seeds to the germination was 3 days to 7 days and the germination ratio was 50% to 90%, in which fluctuation was observed. In the first embodiment of the present invention, the yield of the Salad Bowl Red was 1.6 times higher than the yield by the common cultivating method and the cultivation period was 27 days (41 days by the common cultivating method). The yield was increased and the cultivation period was shortened (refer to FIG. 4).

FIG. 5A and FIG. 5B are photographs illustrating 4 L of tap water to which a voltage of 7 kV is applied at an electric power of 15 W and a frequency of 22 kHz and this tap water is allowed to stand for 30 days after voltage application. It was found that in a laboratory having a room temperature of 22°C, a humidity of 50% to 90%, and an area of about 24.3 $m^2$, the number of bacteria was not increased for about 10 days. The case of generating plasma by applying the voltage into water could most reduce the proliferation of the bacteria (refer to FIG. 6).

In FIG. 7A and FIG. 7B, the voltage (6.5 kVac, 15 W, 6 h) was applied to the culture medium and thereafter 10 saplings of double camellia (tree length 15 cm) was planted as cuttings to the culture medium to which the voltage is applied. Five saplings were planted in a place where sunlight did not shine whole day and five saplings were planted in a place where sunlight shined for 4 hours. Two saplings out of the former five saplings and no sapling out of the latter five saplings were fixed and the saplings were rooted at least after one month. As described above, it was found that the application of the voltage allowed activation of the root of the saplings having difficulty in the cuttings and accelerated the rooting.

What kinds of the plasma (ions and radical groups) affects the actions (activation of cells) described below has not been clear until now. The plant cultivating method according to the first embodiment of the present invention confirms effects such as hydrophilization and activation of the seeds, increase in the germination ratio, shortening of the number of days until germination, rooting action of roots, elongation acceleration of roots, prevention to pathogenic bacteria, less fluctuation of growth after germination (relatively uniform), and fast growth of the plants. The present invention allows healthy plants and leaf vegetables to be provided without any use of pesticides and having less fluctuation in quality, safety, and high added value and thus the effect of the present invention is extremely significant. These effects are obvious from the results of Experimental Examples 1 to 5.

Second embodiment

FIG. 8 is a schematic view illustrating one example of the plant cultivating apparatus used in the plant cultivating method according to the second embodiment of the present invention.

The plant cultivating apparatus 100 illustrated in FIG. 8 includes the plant cultivation container 110, the culture material 120, the gas 130, the first electrode 140a, the second electrode 140b, and the plants 150.

In FIG. 8, in order to rapidly germinate the seeds using the culture material 120 such as a culture medium and a culture soil, a negative voltage of 4 kV or more and 15 kV or less at a frequency of 0 Hz or more and 200 kHz or less is repeatedly applied to at least one of the culture material 120 except seeds or plants 150 after germination and the gas 130 surrounding the culture material 120 with the electrode 140a and the electrode 140b with the culture material 120 as reference potential.

In FIG. 8, it has been reported that the voltage is applied and the gas 130 in the plant cultivation container 110 is negatively charged, whereby the air 130 modified by the application of the voltage is negatively ionized and nitrate nitrogen is generated by chemical reaction before the negatively ionized air reaches the inside of the plants 150 (refer to FIG. 9).

FIG. 10 is a schematic view illustrating a preferable range of the content of nitrate nitrogen in the growth process of plants.

Nitrogen serving as an essential nutrient is essential for the cells of leaves and stems. However, in a state of insufficient growth such as seeds immediately after germination or seedlings, root rot occurs and growth delayed in the case where the insufficiently grown plants take up the same amount of the nitrogen as the amount used for plants in a fully grown state. In contrast, in a state where plants grow to be able to be harvested, nitrogen is not required. It has been generally known that ingestion of excessive nitrate nitrogen from vegetables or the like allows the human to cause health hazard.

Therefore, depending on the growth stage of the plants, the amount of the nitrate nitrogen (as the supply source of nitrogen) is preferably increased or decreased to an adequate amount.

Examples of the method for increasing the amount of the nitrate nitrogen include a method for increasing the region of the negative voltage. Specifically, the examples include a method for maintaining the generated radical species from several tens of seconds to 30 minutes by further lowering the voltage (for example, the voltage is lowered from -4 kV to -6 kV), increasing frequency to high frequency, and applying the voltage using an ion exchange membrane (for electrolytic method).

Examples of the method for decreasing the amount of the nitrate nitrogen include a method for stopping the application of the voltage to the gas in the plant cultivation container.

Application of the high voltage to the culture material 120 or the air 130 causes electrolytic dissociation of molecules to generate $OH^-$ (hydroxyl group) or the nitrate nitrogen. At the same time, endothermic reaction occurs for obtaining electron energy from 1 eV to 10 eV. This action is generated only in the case where the negative voltage is applied to the culture material 120, the air 130, or the like. In the case where the positive voltage is applied, the polarity of the negative ions is concentrated around the electrode and do not spread in a wide range of space.

In the case where the negative voltage is applied, both negative ions ($OH^-$) and positive ions ($H^+$) are generated. The negative ions ($OH^-$) are consumed more for conducting neutralization reaction with $CO_2$, $O_2$, and $N_2$ in the air. From this reason, more positive ions ($H^+$) remain than the negative ions ($OH^-$) and thus the inside of the apparatus becomes acidic.

In the case where the positive voltage is applied, the negative ions are gathered around the positive electrode and do not spread and thus the inside of the apparatus immediately becomes acidic. Therefore, in order to increase the radical species, application of kinetic energy is required.

In tank farming (a volume of a water tank of approximately less than 45 cm), creeping discharge was carried out at an electric power of 0.4 W and a voltage of 4 kVdc or more and 6 kVdc or less to generate the negative ions, whereby increase in the amount of the nitrate nitrogen (nitrogen nutrient) was confirmed. However, the amount of the nitrate nitrogen was not proportional to the yield. The increase in the yield was observed in an amount of the negative ions of 500,000 ions/cc or more and 1,000,000 ions/cc or less and the highest increase in the yield was observed at an amount of the negative ions of 500,000 ions/cc (refer to FIG. 11A).

FIG. 11B is a view illustrating the result of measuring the nitrate nitrogen concentration in the plant cultivating apparatus in which Boston Lettuce was cultivated and 500,000 ions/cc of the negative ions are generated for 25 days (measured at every 5 days).

FIG. 11B confirms that the nitrate nitrogen concentration was increased along with the passage of time. This is probably because the nitrate nitrogen was replenished by constantly applying the voltage to the gas in the plant cultivation container. The concentration of the nitrate nitrogen was increased by 130 ppm (23% increase) after 20 days from the application of the voltage to the gas in the plant cultivating apparatus and was significantly decreased from after 20 days. This is because the nitrate nitrogen was consumed for the full growth of Boston Lettuce. The consumption amount of the nitrate nitrogen varies depending on the degree of the growth and thus the required amount also varies.

The content of the nitrate nitrogen after voltage application is preferably 120 ppm or more and 900 ppm or less and more preferably 440 ppm or more and 650 ppm or less.

In a common cultivating method without any treatment, the cause of the change in the amount of the negative ions is probably because the installation location of the apparatus using the common cultivating method is the place located within 50 cm from the apparatus using the second embodiment. Originally, more difference in the amount of the negative ions and the yield may be observed.

The voltage for which increase in the germination of the plant seeds and the growth effect of the plants is confirmed is a repeating negative voltage of 4 kV or more (preferably 6 kV or more) and 15 kV or less at a frequency of 0 Hz or more and 140 kHz or more. The voltage more than 15 kV increases the amount of the negative ions and, at the same time, the amount of ozone is also increased. Therefore, ozone tends to remain and thus the growth of the plants stops in the second embodiment in which the voltage is constantly applied into the plant cultivating apparatus, which is not suitable.

Third embodiment

In a third embodiment, a positive and negative voltage of 4 kV or more and 15 kV or less is repeatedly applied to the culture medium alone at a frequency of 8.64 kHz or more and 200 kHz or less. The discharge caused by the application of the voltage is the streamer discharge.

As the voltage applied to the culture material, the action effect is sufficiently confirmed even when repeating positive and negative voltage or negative voltage is 4 kV or more (preferably 6 kV or more) and 15 kV or less and a frequency of 8.64 kHz (geomagnetism) or more and 200 kHz or less.

In the third embodiment, a method for obtaining the unit that can achieve the action obtaining increase in the germination ratio of the seeds, shortening of the number of days until germination, hydrophilization of the seeds, rooting action of roots, elongation acceleration of roots, prevention to pathogenic bacteria, increase in the yield, and shortening the cultivation period without deteriorating the action by efficiently reducing the used electric power and using the simple voltage supply.

The voltage synchronized with the frequency of the geomagnetism is applied, whereby effective (reduction in electric power: an oscillating circuit, a circuit from commercial use and a switching circuit, and a smoothing rectifier circuit are not necessary) and repetitive voltage generation is possible above ground. Although the power is several hundreds of mW, the application is possible. Use of the streamer discharge is effective because circuit elements do not become larger due to capability of uniform treatment on the surface

Fourth embodiment

FIG. 12 is a schematic view illustrating one example of the plant cultivating apparatus used in the plant cultivating method according to a fourth embodiment.

In FIG. 12, the streamer discharge is generated by using a cylindrical container 400 including a first electrode portion 410a on the surface, a dielectric material portion 420 inside the first electrode portion 410a, and second electrode portions 410b inside the dielectric material portion 420, circulating the culture material inside the dielectric material portion 420, and applying the voltage between the first electrode portion 410a and the second electrode portions 410b.

A gap exists between the dielectric material portion 420 and the second electrode portion 410b and the air, water, steam, or culture material circulates in the gap.

FIG. 12 illustrates a dielectric material barrier discharge method (refer to FIG. 13) including the dielectric material portion 420 between the first electrode portion 410a and the second electrode portions 410b. The voltage is applied between the first electrode portion 410a and the second electrode portions 410b with the first electrode portion 410a as the reference potential. The plasma generated by the method described above modifies the air, water, steam, or culture material.

The plasma is generated by applying a high voltage pulse of 13 kV using a dedicated invertor and a DC power source (for example, Japanese Unexamined Patent Application Publication No. 2010-186984, Japanese Unexamined Patent Application Publication No. 2011-57442, Japanese Unexamined Patent Application Publication No. 2012-133206, and Japanese Unexamined Patent Application Publication No. 2012-191828).

The gap (air gap) has a distance of 0.5 mm or more and 2 mm or less. The gap having a distance of more than 2 mm causes the dielectric breakdown of the dielectric material portion 420 by arc discharge and thus leads to the failure of the dielectric material portion 420 and the power source for applying due to excessive current. The thickness of the dielectric material portion 420 is 0.5 mm or more and 2 mm or less. In experiments, quartz glass is used as the dielectric material portion 420 from the viewpoint of few bubbles inside the glass. Discharged current flows in this gap and the water, steam, and air desired to be modified inflow to the gap. The modification action is generated around the gap.

A discharge path is generated between the cylindrical first electrode portion 410a serving as the reference potential and having heat release action and the second electrode portions 410b. The concentrical arrangement of the columnar second electrode portion 410b and the cylindrical first electrode portion 410a results in not starting the discharge even when the voltage is applied between the first electrode portion 410a and the second electrode portion 410b.

As illustrated in FIG. 12, a shape of providing paths capable of easily discharging (a regular polygon, which can change the number of electrode portions B depending on the amount of electric power desired to be applied) is considered as the structure of the cylindrical container. However, the purpose is not the shape but the circulation of water, steam, and air inside the dielectric material 420. In the case of modifying water, the circulating water has the action of a heat release property.

As the application polarity of the voltage, an electrode portion 410a and an electrode portion 410b may be interchanged. This is because when the charge is desired to be the negative charge, the power source for application is not necessary to be changed by reverse connection. In view of unnecessary radiation noise emitted to the outside, the electrode portion at the outer side is preferably determined to be the reference potential and the heat release property is added.

Modification Example of fourth embodiment

FIG. 14 is a schematic view illustrating the plant cultivating apparatus used in the plant cultivating method according to Modification Example 1 of the fourth embodiment.

Modification Example 1 of the fourth embodiment has a structure in which in the fourth embodiment, the second electrode portion 410b has a regular polygon shape and small area and uniform distance exist for starting discharge between the corner of the second electrode portion 410b and the dielectric material portion 420. This structure allows uniform streamer discharge to be generated after the voltage application.

The second electrode portion 410b has a structure in which the inside may be hermetically closed or may be partially hollow. The shape of the corner of the second electrode portion 410b is preferably a round shape in the case where the cylindrical container 400 is a columnar shape.

Fifth embodiment

A fifth embodiment has a seed housing portion 430 having through holes 440 at the side circumferential surface inside the cylindrical container 400 and the second electrode portion 410b and the adjacent seed housing portion 430 do not contact with each other in the fourth embodiment.

The distance between the second electrode portion 410b and the adjacent seed housing container 430 is preferably 1.5 cm or more and 2.0 cm or less. The seed housing container 430 having a distance of 2.0 cm or less allows the action to the seeds to be achieved before the radical groups in the culture material to which the voltage is applied disappear. The seed housing container 430 having a distance of 1.5 cm or more also allows the radical species after the voltage application in the culture material to be generated in time before the culture material after voltage application acts on the seeds (this is because, according to Paschen's law, a distance for accelerating electrons of less than 1.5 cm results in an insufficient distance and thus electron energy is not converted into kinetic energy; therefore, the energy does not sufficiently contribute to generate the secondary radical species).

In the seed housing portion 430, the seeds desired to be cultivated can be contained within the range of the distance described above.

The seed housing portion 430 has the through holes 440 at the side circumferential surface and the diameter of the through holes 440 can be determined depending on the size of the plant seeds so that the plant seeds do not jump out of the housing portion 430 (refer to FIG. 15). The air, aqueous solution, steam, or the like to which the voltage is applied come into and go out of the seed housing portion 430 through the through holes 440. This configuration accelerates activation of the seeds and hydrophilization of the seed surface (the surface corresponding to the hull of the seed) before the radical groups in the culture material after the voltage application disappear.

The structure of the shape of the seed housing portion 430 is not particularly limited as long as the seed housing portion 430 can be taken out from the cylindrical container 400. Examples of the structure include a structure that can be fastened with screws.

The seed housing portion 430 is nonconductive. This allows the radical groups to be prevented from forming molecular bond again.

The seed housing portion 430 is not placed on the discharge path of the electrode portion 410a and the electrode portion 410b. This allows the voltage to be applied to the seeds directly and the annihilation of the seeds to be prevented.

The applied time of the voltage can be determined depending on the kinds of the seeds by experimental verification and is within several minutes.

## Sixth embodiment

FIG. 16 is a schematic view illustrating an example of the plant cultivating apparatus used in the plant cultivating method according to a sixth embodiment.

In FIG. 16, the material of the plant cultivation container containing the culture material after the voltage application in the fourth embodiment is silicon or fluorine.

The culture material after the voltage application is transferred into the plant cultivation container that cultivates the plants in order to be used for cultivating the plants.

The plant cultivation container is a container made of a material containing amorphous silicon or fluorine as a main component and the seeds can be sown to the culture material contained in the container (refer to FIG. 16).

The air, aqueous solution, or steam after the voltage application is required to be retained in the plant cultivation container because the generated radical groups and the like are likely to return to an original state. The material of the plant cultivation container is preferably amorphous silicon, fluorine, or the like. The inventor of the present invention has verified several materials for the material of the container. As a result of the cultivation, the container made of a material containing amorphous silicon or fluorine as the main component provides 10% faster growth than the growth when the polypropylene resin is used for the container. In the case where a metal container is used for the plant cultivation container, ions and radical groups in the air, aqueous solution, or steam that directly contact to the metal surface return to molecules and thus the metal container cannot be used.

Examples of a method for returning the air, aqueous solution, or steam after the voltage application to the plant cultivation container include a method for dissolving in a solvent in the plant cultivation container using an air stone in the case of the air and the steam and a method for transferring to the plant cultivation container using a circulation system in the case of the culture material.

## Seventh embodiment

FIG. 17 is a schematic view illustrating one example of the plant cultivating apparatus used in the plant cultivating method according to a seventh embodiment.

In the plant cultivating apparatus illustrated in FIG. 17, a high voltage induction coil is used when the voltage is applied in the second embodiment.

The culture material 120 is placed in the plant cultivation container 110, the plant cultivation area is provided on the culture material 120, and the inside of the plant cultivation area is filled with the gas. In the plant cultivation area, an air core coil 160 made of a conductor to which a plurality of conductive wires are wound and in which the terminal is opened is placed.

The air core coil 160 has a structure in which a plurality of conductors having a length of several hundred meters to several kilometers are wound.

The oscillator can constantly generate the voltage around the plants 150 by inducing magnetic flux using the geomagnetism frequency to induce the voltage. The gas 130 and the culture material 120 can be modified by this voltage.

Eighth embodiment

An eighth embodiment is the plant cultivating method in which the air core coil 160 acts on by radio wave reception in the seventh embodiment.

As the air core coil 160, a high voltage induction coil acting on by the wave reception may also be used.

The air core coil 160 may be used singly, or another air core coil 160 capable of magnetic coupling to which the voltage is applied may be placed in the culture material 120 and the air 130. The voltage can be generated by the air core coil 160 of which voltage is raised by this configuration. This voltage allows the gas 130 or the culture material 120 to be modified.

Hereinafter, the first embodiment will be specifically described with reference to Experimental Examples. The present invention, however, is to the scope of the appended claims.

Experimental Example 1

In a plant cultivation container (size: 45 cm), a mixed liquid of 4 L of water and 30 mL of the culture medium having the following composition was placed and a sponge was placed so as to be immersed in the mixed solution. To the mixed solution, a voltage of 8 kV was applied at an electric power of 35 W and a frequency of 22 kHz for 3 hours.

Composition of culture medium

| | |
|---|---|
| • Nitrogen | 1.3% by mass |
| • Potassium | 1.9% by mass |
| • Magnesia | 0.32% by mass |
| • Manganese | 0.008% by mass |
| • Boron | 0.008% by mass |

After the voltage was applied to the mixed solution, fourteen seeds of Salad Bowl Red were sown on the sponge. After the seeds were sown, a voltage of 8 kV was constantly applied to the gas in the plant cultivation container at an electric power of 35 W and a frequency of 22 kHz. During the cultivation period, the plant cultivation container was constantly irradiated with light from a LED and the air in the plant cultivation container was circulated. An air stone was placed near the roots of Salad Bowl Red and the air was constantly applied into the mixed solution. After 3 days from the germination of the seeds of Salad Bowl Red, 0.6% by mass of phosphoric acid was added and the Salad Bowl Red was cultivated at a temperature of 25°C to 27°C.

Experimental Example 2

Salad Bowl Red was cultivated by the same manner as the manner in Experimental Example 1 except that the voltage was not applied to the gas in the plant cultivation container after the seeds were sown in Experimental Example 1.

Comparative Experimental Example 1

Salad Bowl Red was cultivated by the same manner as the manner in Experimental Example 2 except that the voltage was not applied to the mixed solution in Experimental Example 2.

Comparative Experimental Example 2

Salad Bowl Red was cultivated by the same manner as the manner in comparative Experimental Example 1 except that the culture medium in the mixed solution was replaced by the culture medium having the following composition in Comparative Experimental Example 1.

Composition of culture medium

| | |
|---|---|
| • Nitrogen | 1.3% by mass |

(continued)

| | |
|---|---|
| • Phosphoric acid | 0.6% by mass |
| • Potassium | 1.9% by mass |
| • Magnesia | 0.32% by mass |
| • Manganese | 0.008% by mass |
| • Boron | 0.008% by mass |

In Experimental Examples 1 and 2 and Comparative Experimental Examples 1 and 2, the germination ratio, the number of days from seed sowing to harvest, and the body length of the plant and the weight of three plants after 30 days from the seed sowing were measured. The measurement results are listed in Table 1.

Germination ratio

The germination ratios in Experimental Examples 1 and 2 and Comparative Experimental Example 1 and 2 were determined in accordance with the following formula.

$$\text{Germination ratio (\%)} = \text{Number of germinated seeds (seeds)}/\text{Number of sown seeds (seeds)} \times 100 \qquad (1)$$

Number of days from seed sowing to harvest

The harvest date is determined to be a date when the average of the body lengths of the germinate plants reached 16 cm.

Table 1

| | Cultivated plant | Voltage application to mixed solution | Voltage application to gas in plant cultivation container | Germination ratio [%] | Number of days from seed sowing to harvest [days] | Body length of plant after 30 days from seed sowing [cm] | Weight of plants after 30 days from seed sowing (Total of three plants) [g] |
|---|---|---|---|---|---|---|---|
| Experimental Example 1 | Salad Bowl Red | Applied | Applied | 93 | 27 | 18.0 | 384.4 |
| Experimental Example 2 | Salad Bowl Red | Applied | Not applied | 93 | 29 | 16.0 | 434.3 |
| Comparative Experimental Example 1 | Salad Bowl Red | Not applied | Not applied | 7 | 39 | 17.0 | 427.1 |
| Comparative Experimental Example 2 | Salad Bowl Red | Not applied | Not applied | 7 | 40 | 16.0 | 422.7 |

Hereinafter, the second embodiment will be specifically described with reference to Experimental Examples.

Experimental Example 3

In the plant cultivation container (size: 45 cm), a mixed liquid of 4 L of water and 30 mL of the culture medium having the following composition was placed and a sponge was placed so as to be immersed in the mixed solution. The seeds of Boston Lettuce were sown on the sponge.

Composition of culture medium

- Nitrogen 1.3% by mass
- Phosphoric acid 0.6% by mass
- Potassium 1.9% by mass
- Magnesia 0.32% by mass
- Manganese 0.008% by mass
- Boron 0.008% by mass

A negative voltage of 4.3 kV was applied to the gas in the plant cultivation container at an electric power of 0.3 W. The amount of the ion and the amount of ozone in the plant cultivation container at the time of the voltage application start (initial stage) were measured using an ion counter and a dissolved ozone meter. Consequently, the amount of the ion was 500,000 ions/cc or more and the amount of ozone was 39 ppm. The concentration of the nitrate nitrogen in the gas was 440 mmppm.

During the cultivation period, the plant cultivation container was constantly irradiated with light from LED lighting and the air in the plant cultivation container was circulated. An air stone was placed near the roots of Salad Bowl Red and the air was constantly applied into the mixed solution. For 30 days from the sowing of the seeds of Boston Lettuce, Boston Lettuce was cultivated under an environment of a temperature of 25°C to 27°C and hours of sunlight per day of 16 hours.

Experimental Example 4

The plants were cultivated by the same manner as the manner in Experimental Example 3 except that the negative voltage of 4.3 kV at the electric power of 0.3 W was replaced by a negative voltage of 5.5 kV at an electric power of 0.55 W in Experimental Example 3. The amount of the ion was 1,800,000 ions/cc or more and the amount of ozone was 500 mmppm at the time of the voltage application start. The concentration of the nitrate nitrogen in the gas was 550 mmppm.

Experimental Example 5

The plant was cultivated by the same manner as the manner in Experimental Example 3 except that Boston Lettuce was replaced by Garland Chrysanthemum in Experimental Example 3. The amount of the ion was 500,000 ions/cc or more and the amount of ozone was 39 ppm at the time of the voltage application start. The concentration of the nitrate nitrogen in the gas was 470 mmppm.

The purpose of Experimental Example 5 is to confirm the germination ratio, the degree of growth, and quality variation when plasma is applied using Garland Chrysanthemum, which has a low germination ratio.

Experimental Example 6

The plant was cultivated by the same manner as the manner in Experimental Example 3 except that Boston Lettuce was replaced by Pinot Green in Experimental Example 3. The amount of the ion was 500,000 ions/cc or more and the amount of ozone was 39 ppm at the time of the voltage application start. The concentration of the nitrate nitrogen in the gas was 470 mmppm.

In Experimental Examples 3 to 6, the body length of the plant after 30 days from the seed sowing, and the weight of three plants were measured. The measurement results are listed in Table 2. The sign of minus in the item of Voltage (kV) in Table 2 means that the negative voltage was applied.

Table 2

| | Cultivated plant | Germination ratio [%] | Voltage [kV] | Number of days from seed sowing to germination | Body length of plant after 30 days from seed sowing [cm] | Weight of plants after 30 days from seed sowing (Total of three plants) [g] |
|---|---|---|---|---|---|---|
| Experimental Example 3 | Boston Lettuce | 80 | -4.3 | 1 | 19.5 | 108.6 |

(continued)

| | Cultivated plant | Germination ratio [%] | Voltage [kV] | Number of days from seed sowing to germination | Body length of plant after 30 days from seed sowing [cm] | Weight of plants after 30 days from seed sowing (Total of three plants) [g] |
|---|---|---|---|---|---|---|
| Experimental Example 4 | Boston Lettuce | 80 | -5.5 | 1 | 18.0 | 131.2 |
| Experimental Example 5 | Garland Chrysanthemum | 50 | -4.3 | 1 | 22.3 | 438.7 |
| Experimental Example 6 | Pinot Green | 85 | -4.3 | 1 | 14.5 | 316.9 |

Hereinafter, Experimental Example with respect to an influence in which ozone affects the germination of the seeds and the growth of the plants will be described.

Experimental Example 7

In the plant cultivation container (size: 45 cm), a mixed liquid of 4 L of water and 30 mL of the culture medium having the following composition was placed and a sponge was placed so as to be immersed in the mixed solution. The seeds of Great Lakes were sown on the sponge.

[Composition of culture medium]

- Nitrogen 1.3% by mass
- Phosphoric acid 0.6% by mass
- Potassium 1.9% by mass
- Magnesia 0.32% by mass
- Manganese 0.008% by mass
- Boron 0.008% by mass

A positive voltage of 6.5 kV was applied to the gas in the plant cultivation container at an electric power of 0.3 W to generate ozone in the gas in the plant cultivation container. The amount of ozone in the plant cultivation container at the time of the voltage application start was measured. Consequently, the amount of ozone was 2.5 mg/H. The concentration of the nitrate nitrogen in the gas was 690 mmppm.

During the cultivation period, the plant cultivation container was constantly irradiated with light from LED lighting and the air in the plant cultivation container was circulated. An air stone was placed near the roots of Salad Bowl Red and the air was constantly applied into the mixed solution. For 30 days from the sowing of the seeds of Great Lakes, Great Lakes was cultivated under an environment of a temperature of 25°C to 27°C and hours of sunlight per day of 16 hours.

Comparative Experimental Example 3

Great Lakes was cultivated by the same manner as the manner in Experimental Example 7 except that the voltage was not applied to the gas in the plant cultivation container in Experimental Example 7.

In Experimental Examples 7 and Comparative Example 3, the body length of the plant and the weight of three plants after 30 days from the seed sowing were measured. The measurement results are listed in Table 3. In addition, in Experimental Examples 7 and Comparative Example 3, the degree of the growth of the root was observed by visual observation. The result of Experimental Example 7 is illustrated in FIG. 18A and the result of Comparative Experimental Example 3 is illustrated in FIG. 18B.

Table 3

| | Cultivated plant | Voltage [kV] | Body length of plant after 30 days from seed sowing [cm] | Weight of plants after 30 days from seed sowing (Total of three plants) [g] |
|---|---|---|---|---|
| Experimental Example 7 | Great Lakes | 6.3 | 7.5 | 20.72 |
| Comparative Experimental Example 3 | Great Lakes | - | 14.5 | 51.06 |

With the plant cultivating method and the plant cultivating apparatus described in the above the conventional various problems can be solved and the purpose of the present disclosure can be achieved.

The above-described embodiments are illustrative and do not limit the present invention. Thus, numerous additional modifications and variations are possible in light of the above teachings within the scope of the appenden claims. Further, features of components of the embodiments, such as the number, the position, and the shape are not limited the embodiments and thus may be preferably set.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present disclosure may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present disclosure may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

**1.** A plant cultivating method comprising:

applying a voltage of 4 kV or more and 15 kV or less to a culture material not including phosphorus at a frequency of 0 Hz or more and 200 kHz or less;
sowing a seed of a plant in the culture material after the applying; and
adding phosphorus to the culture material within 7 days from germination of the seed of the plant.

**2.** The plant cultivating method according to claim 1, wherein pH of the culture material when sowing the seed of the plant is 5 or more and 8 or less.

**3.** The plant cultivating method according to claim 1 or 2, wherein at the adding, the culture material is added within 3 days from the germination of the seed of the plant.

**4.** The plant cultivating method according to any one of claims 1 to 3, wherein the culture material comprises any one of a culture medium and a culture soil.

**5.** The plant cultivating method according to any one of claims 1 to 4, wherein a voltage of 4 kV or more and 15 kV or less is applied at a frequency of 8.64 kHz or more and 200 kHz or less.

**6.** The plant cultivating method according to any one of claims 4 to 5, wherein a cylindrical container with a first electrode portion on a surface, a dielectric material portion inside the first electrode portion, and a second electrode portion inside the dielectric material portion is used, culture material is circulated inside the dielectric material portion, and voltage is applied between the first electrode portion and the second electrode portion to generate streamer discharge.

**7.** The plant cultivating method according to claim 6, wherein the cylindrical container includes a seed housing portion inside the cylindrical container, the seed housing portion having a through hole at a side circumferential surface, and the second electrode portion and the adjacent seed housing portion do not contact with each other.

**8.** The plant cultivating method according to any one of claims 4 to 7, wherein a material of a plant cultivation container containing the culture material after voltage is applied comprises any one of silicon or fluorine.

**9.** The plant cultivating method according to any one of claims 4 to 8, wherein at the growing, a high voltage induction coil is used when the voltage is applied.

**10.** A plant cultivating apparatus comprising: a phosphorus addition unit configured to add phosphorus to the culture material within 7 days from germination of the seed of the plant, **characterized in** comprising additionally:

a voltage applying unit configured to apply a voltage of 4 kV or more and 15 kV or less to a culture material not including phosphorus at a frequency of 0 Hz or more and 200 kHz or less;
a sowing unit configured to sow a seed of a plant in the culture material.

**Patentansprüche**

**1.** Verfahren zum Kultivieren von Pflanzen, umfassend:

Anlegen einer Spannung von 4 kV oder mehr und 15 kV oder weniger an ein Kulturmaterial, das kein Phosphor einschließt, bei einer Frequenz von 0 Hz oder mehr und 200 kHz oder weniger;
Aussäen eines Samens einer Pflanze in das Kulturmaterial nach dem Anlegen; und
Zugeben von Phosphor zum Kulturmaterial innerhalb von 7 Tagen nach Keimung des Samens der Pflanze.

**2.** Verfahren zum Kultivieren von Pflanzen nach Anspruch 1, wobei der pH-Wert des Kulturmaterials beim Aussäen des Samens der Pflanze 5 oder mehr und 8 oder weniger beträgt.

**3.** Verfahren zum Kultivieren von Pflanzennach Anspruch 1 oder 2, wobei bei dem Zugeben das Kulturmaterial innerhalb von 3 Tagen nach der Keimung des Samens der Pflanze zugegeben wird.

**4.** Verfahren zum Kultivieren von Pflanzennach einem der Ansprüche 1 bis 3, wobei das Kulturmaterial eines von einem Kulturmedium und einer Kulturerde umfasst.

**5.** Verfahren zum Kultivieren von Pflanzennach einem der Ansprüche 1 bis 4, wobei eine Spannung von 4 kV oder mehr und 15 kV oder weniger bei einer Frequenz von 8,64 kHz oder mehr und 200 kHz oder weniger angelegt wird.

**6.** Verfahren zum Kultivieren von Pflanzennach einem der Ansprüche 4 bis 5, wobei ein zylindrischer Behälter mit einem ersten Elektrodenabschnitt auf einer Oberfläche, eine dielektrische Materialmenge im Inneren des ersten Elektrodenabschnitts und ein zweiter Elektrodenabschnitt im Inneren der dielektrischen Materialmenge verwendet wird, Kulturmaterial im Inneren der dielektrischen Materialmenge zirkuliert, und Spannung zwischen dem ersten Elektrodenabschnitt und dem zweiten Elektrodenabschnitt angelegt wird, um eine Streamer-Entladung zu erzeugen.

**7.** Verfahren zum Kultivieren von Pflanzennach Anspruch 6, wobei der zylindrische Behälter einen Samenaufnahmeabschnitt im Inneren des zylindrischen Behälters einschließt, wobei der Samenaufnahmeabschnitt ein Durchgangsloch an einer peripheren Seitenfläche aufweist und der zweite Elektrodenabschnitt sich nicht in Kontakt mit dem angrenzenden Samenaufnahmeabschnitt befindet.

**8.** Verfahren zum Kultivieren von Pflanzennach einem der Ansprüche 4 bis 7, wobei ein Material eines Behälters zum Kultivieren von Pflanzen, der das Kulturmaterial enthält, nachdem Spannung angelegt wurde, eines von von Silizium und Fluor umfasst.

**9.** Verfahren zum Kultivieren von Pflanzennach einem der Ansprüche 4 bis 8, wobei beim Wachsen eine Hochspannungs-Induktionsspule verwendet wird, wenn die Spannung angelegt wird.

**10.** Verfahren zum Kultivieren von Pflanzen, umfassend:
eine Phosphor-Zugabeeinheit, die konfiguriert ist, um Phosphor zu dem Kulturmaterial innerhalb von 7 Tagen von der Keimung des Samens der Pflanze zuzugeben, **dadurch gekennzeichnet, dass** sie zusätzlich umfasst:

eine Einheit zum Anlegen von Spannung, die konfiguriert ist, um eine Spannung von 4 kV oder mehr und 15 kV oder weniger an ein Kulturmaterial, das kein Phosphor einschließt, bei einer Frequenz von 0 Hz oder mehr und 200 kHz oder weniger anzulegen;
eine Einheit zum Aussäen, die konfiguriert ist, um einen Samen einer Pflanze in das Kulturmaterial auszusäen.

**Revendications**

**1.** Procédé de culture de plantes comprenant:

l'application d'une tension de 4 kV ou plus et 15 kV ou moins à un matériau de culture n'incluant pas de phosphore à une fréquence de 0 Hz ou plus et 200 kHz ou moins;
l'ensemencement d'une graine d'une plante dans le matériau de culture après l'application; et
l'ajout de phosphore au matériau de culture dans les 7 jours à partir de la germination de la graine de la plante.

**2.** Procédé de culture de plantes selon la revendication 1, dans lequel le pH du matériau de culture lors de l'ensemencement de la graine de la plante est de 5 ou plus et de 8 ou moins.

**3.** Procédé de culture de plantes selon la revendication 1 ou 2, dans lequel au moment de l'ajout, le matériau de culture est ajouté dans les 3 jours à partir de la germination de la graine de la plante.

**4.** Procédé de culture de plantes selon l'une quelconque des revendications 1 à 3, dans lequel le matériau de culture comprend l'un quelconque parmi un milieu de culture et un sol de culture.

**5.** Procédé de culture de plantes selon l'une quelconque des revendications 1 à 4, dans lequel une tension de 4 kV ou plus et 15 kV ou moins est appliquée à une fréquence de 8,64 kHz ou plus et 200 kHz ou moins.

**6.** Procédé de culture de plantes selon l'une quelconque des revendications 4 à 5, dans lequel un conteneur cylindrique présentant une première portion d'électrode sur une surface, une portion de matériau diélectrique à l'intérieur de la première portion d'électrode, et une seconde portion d'électrode à l'intérieur de la portion de matériau diélectrique est utilisé, un matériau de culture est mis en circulation à l'intérieur de la portion de matériau diélectrique, et une tension est appliquée entre la première portion d'électrode et la seconde portion d'électrode pour générer une décharge à jet.

**7.** Procédé de culture de plantes selon la revendication 6, dans lequel le conteneur cylindrique inclut une portion de logement de graine à l'intérieur du conteneur cylindrique, la portion de logement de graine ayant un trou traversant au niveau d'une surface circonférentielle latérale, et la seconde portion d'électrode et la portion de logement de graine adjacente n'entrent pas en contact l'une avec l'autre.

**8.** Procédé de culture de plantes selon l'une quelconque des revendications 4 à 7, dans lequel un matériau d'un conteneur de culture de plantes contenant le matériau de culture après que la tension est appliquée comprend l'un quelconque parmi du silicium et de la fluorine.

**9.** Procédé de culture de plantes selon l'une quelconque des revendications 4 à 8, dans lequel au moment de la croissance, une bobine d'induction à haute tension est utilisée lorsque la tension est appliquée.

**10.** Appareil de culture de plantes comprenant,
une unité d'ajout de phosphore configurée pour ajouter du phosphore au matériau de culture dans les 7 jours à partir de la germination de la graine de la plante, **caractérisé en ce qu'**il comprend additionnellement:

une unité d'application de tension configurée pour appliquer une tension de 4 kV ou plus et 15 kV ou moins à un matériau de culture n'incluant pas de phosphore à une fréquence de 0 Hz ou plus et 200 kHz ou moins;
une unité d'ensemencement configurée pour ensemencer une graine d'une plante dans le matériau de culture.

FIG.1

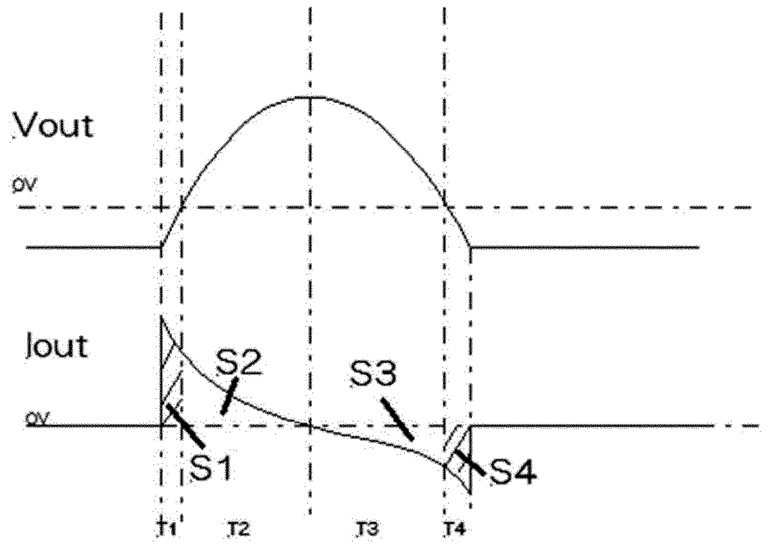
Vout
0V
Iout
0V
S1
S2
S3
S4
T1
T2
T3
T4

FIG.2

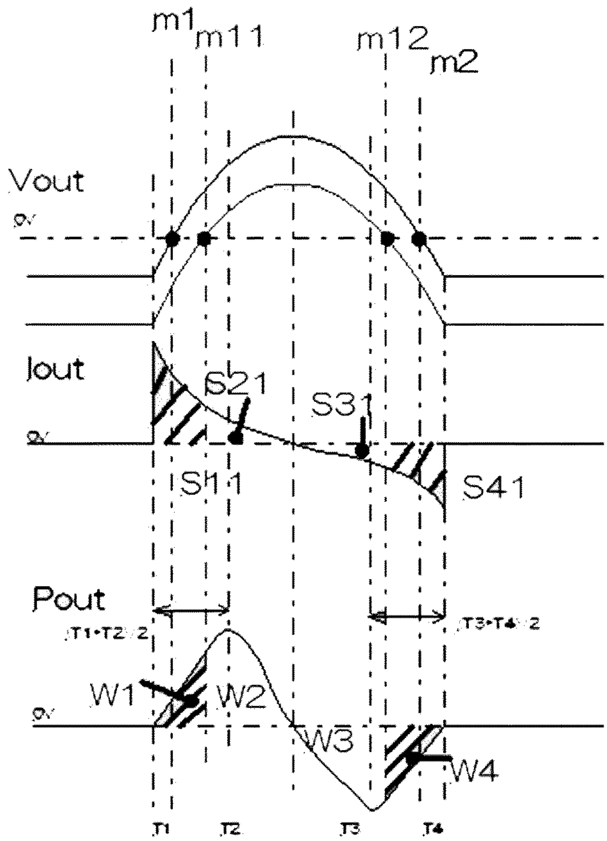
m1
m11
m12
m2
Vout
0V
Iout
0V
S21
S31
S11
S41
Pout
(T1+T2)/2
(T3+T4)/2
0V
W1
W2
W3
W4
T1
T2
T3
T4

FIG.3

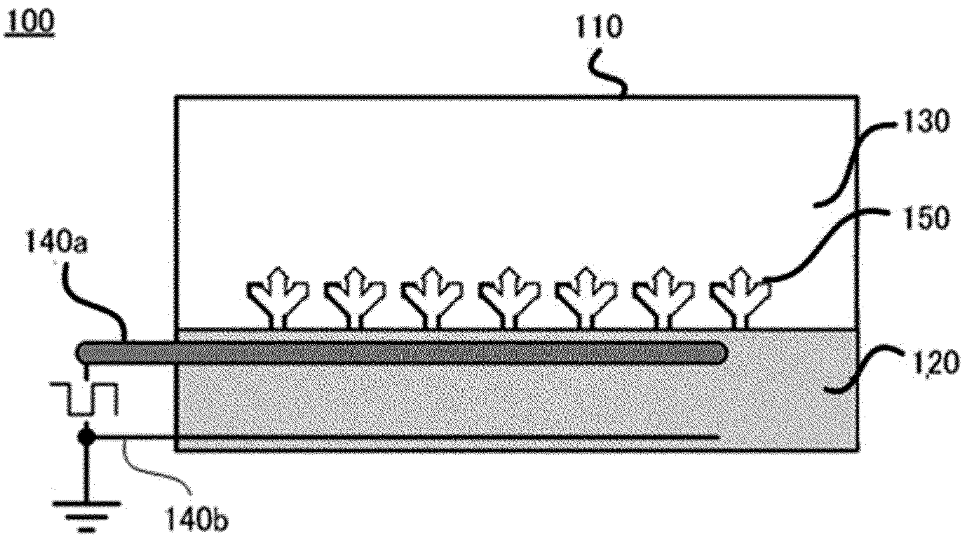
100
110
130
150
140a
120
140b

FIG.4

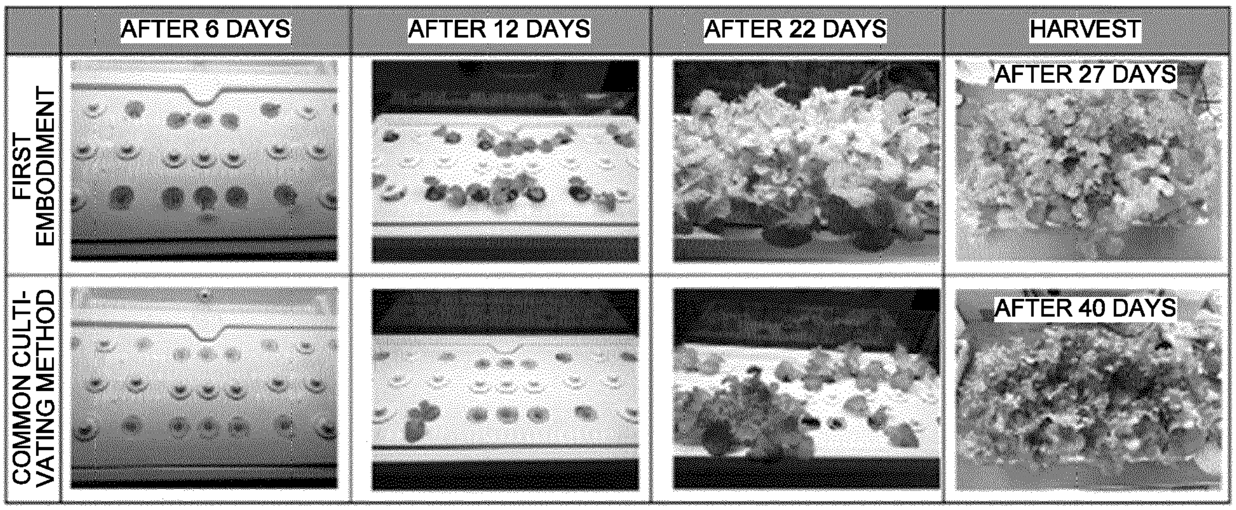
AFTER 6 DAYS
AFTER 12 DAYS
AFTER 22 DAYS
HARVEST
FIRST EMBODIMENT
AFTER 27 DAYS
COMMON CULTI-VATING METHOD
AFTER 40 DAYS

FIG.5A

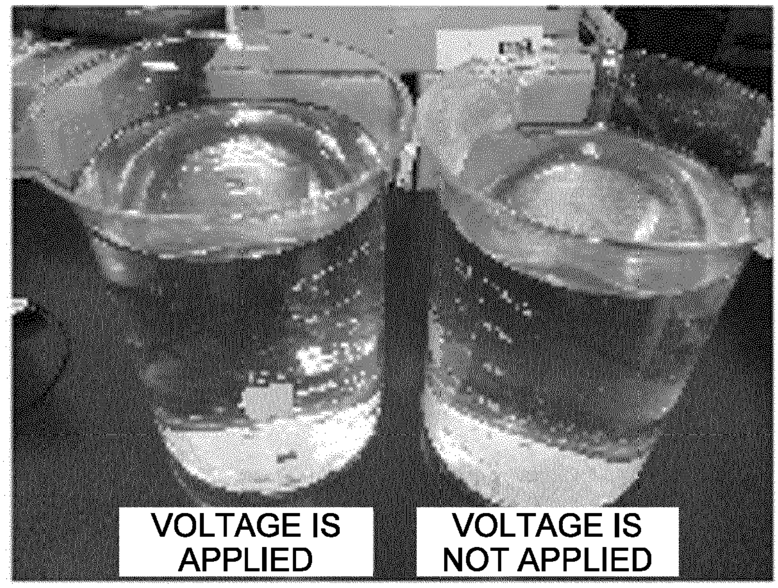
VOLTAGE IS APPLIED
VOLTAGE IS NOT APPLIED

FIG.5B

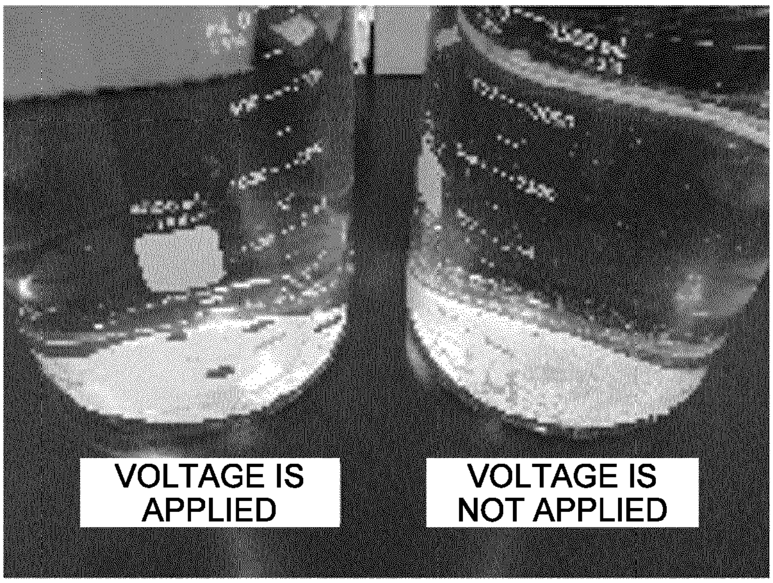
VOLTAGE IS APPLIED
VOLTAGE IS NOT APPLIED

FIG.6

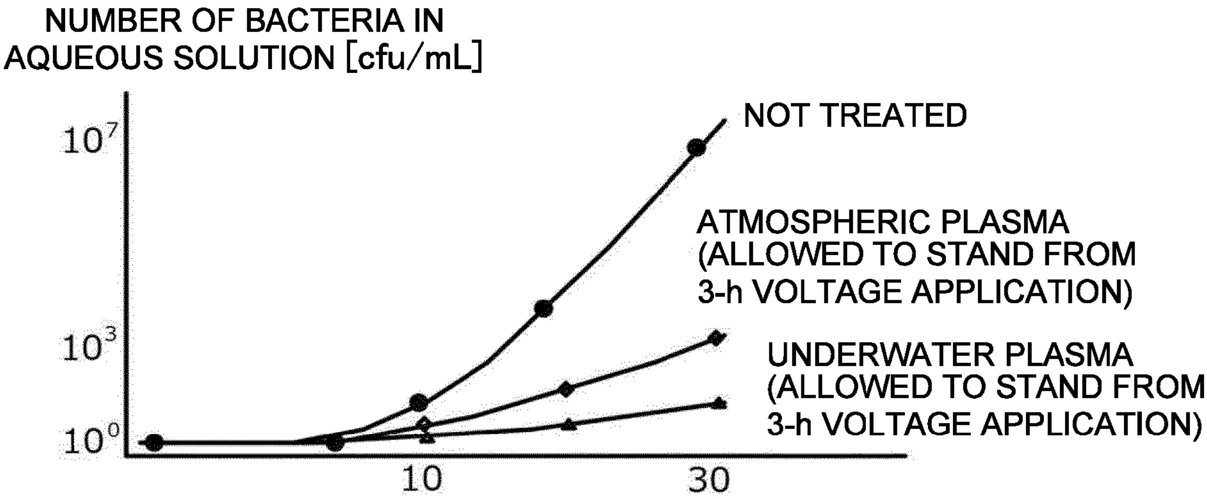
NUMBER OF BACTERIA IN
AQUEOUS SOLUTION [cfu/mL]
$10^7$
$10^3$
$10^0$
10
30
NOT TREATED
ATMOSPHERIC PLASMA
(ALLOWED TO STAND FROM
3-h VOLTAGE APPLICATION)
UNDERWATER PLASMA
(ALLOWED TO STAND FROM
3-h VOLTAGE APPLICATION)

FIG.7A

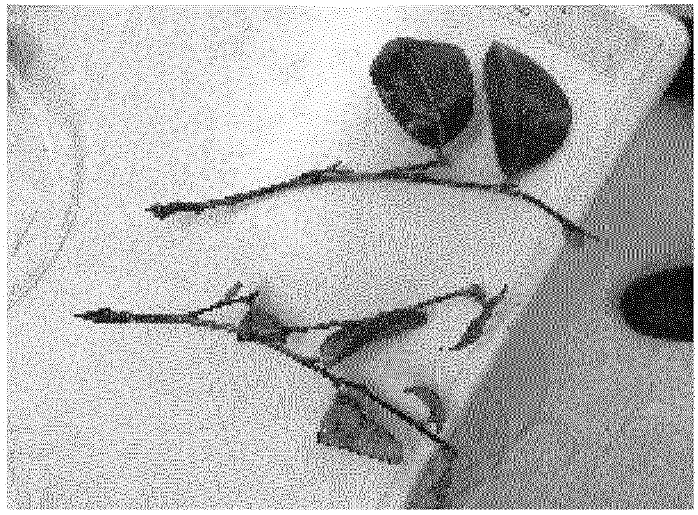

FIG.7B

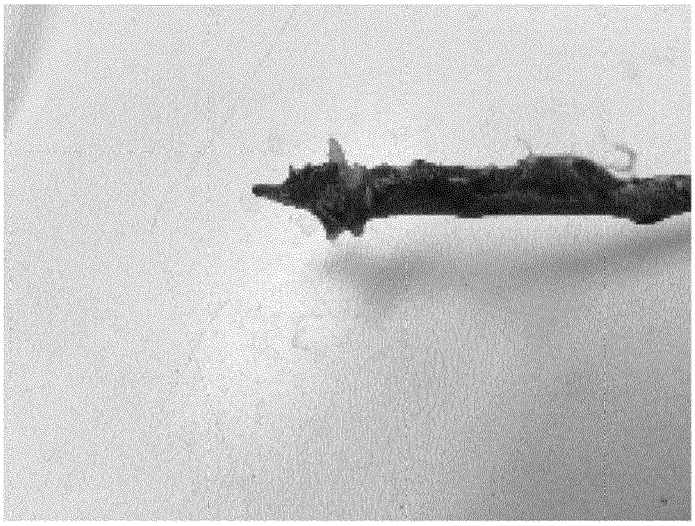

FIG.8

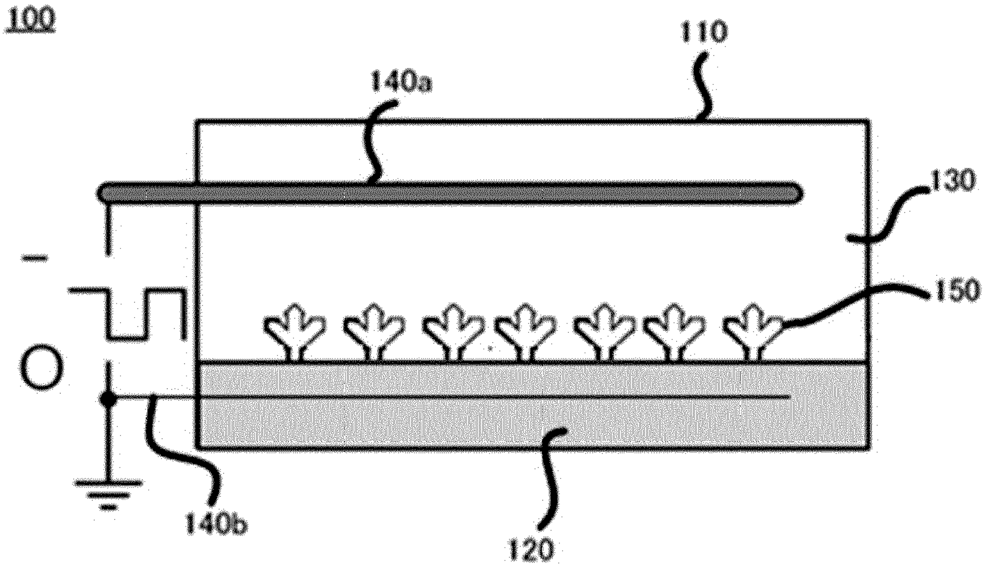


FIG.9

$N_2 + O \rightarrow \cdot N + \cdot NO$
$\cdot NO + \cdot OH \rightarrow HNO_2$
$\cdot NO_2 + \cdot OH \rightarrow HNO_3$
$\cdot NO_2 + \cdot OH \rightarrow \cdot NO_2 + OH^-$
$3HNO_2 \rightarrow HNO_3 + 2NO + H_2O$
$HNO_2 + H_2O_2 \rightarrow H^+ + NO_3^- + H_2O$

PLASMA GENERATION

$HNO_2 \rightarrow H^+ + NO_2^-$
$HNO_3 \rightarrow H^+ + NO_3^-$

STATE WHERE GAS IS DISSOLVED INTO SOLUTION

FIG.10

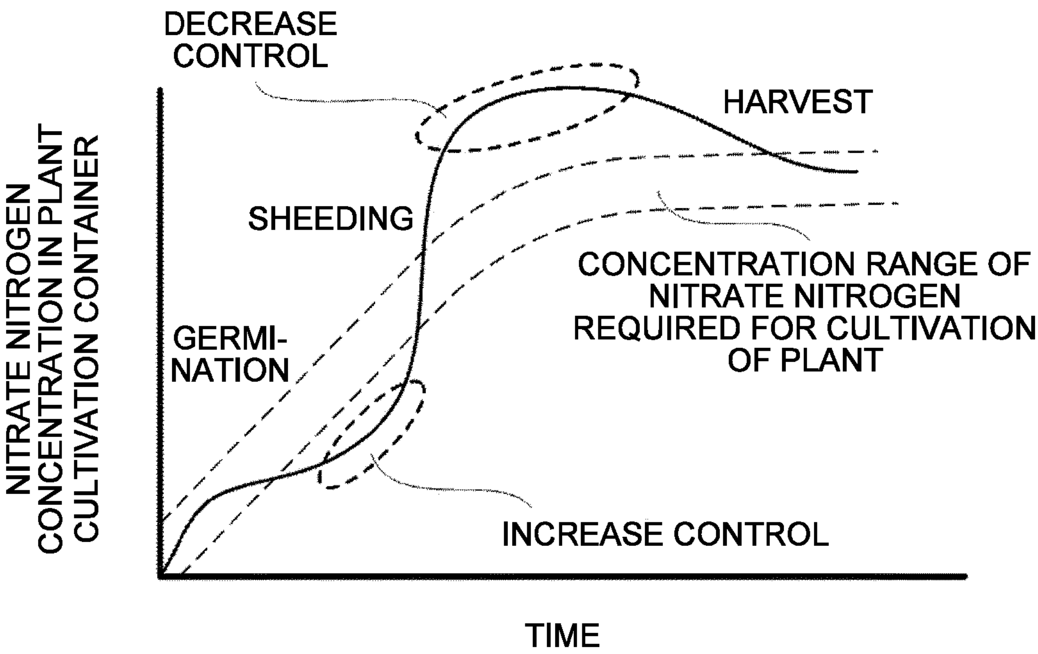
DECREASE CONTROL
HARVEST
SHEEDING
GERMI-NATION
CONCENTRATION RANGE OF NITRATE NITROGEN REQUIRED FOR CULTIVATION OF PLANT
INCREASE CONTROL
NITRATE NITROGEN CONCENTRATION IN PLANT CULTIVATION CONTAINER
TIME

FIG.11A

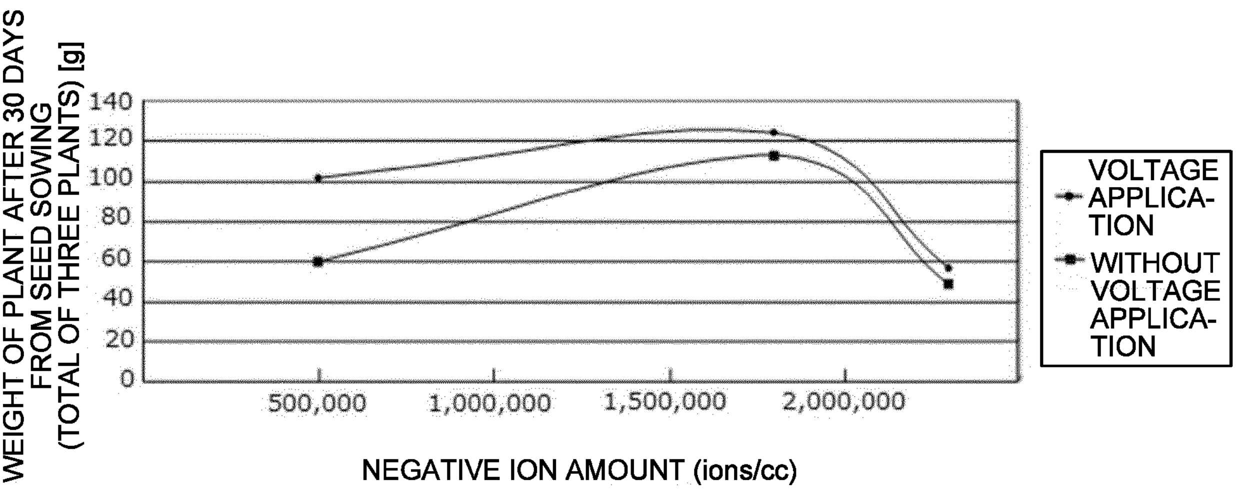


FIG.11B

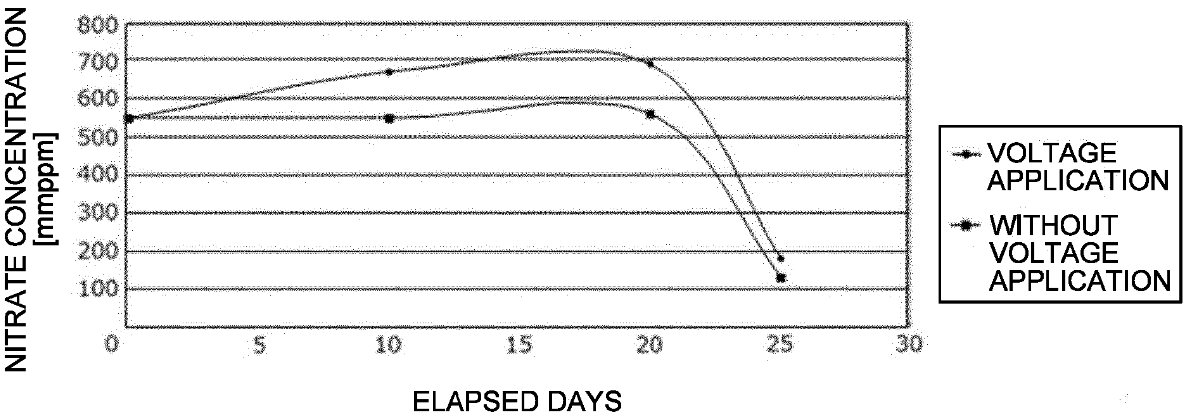

FIG.12

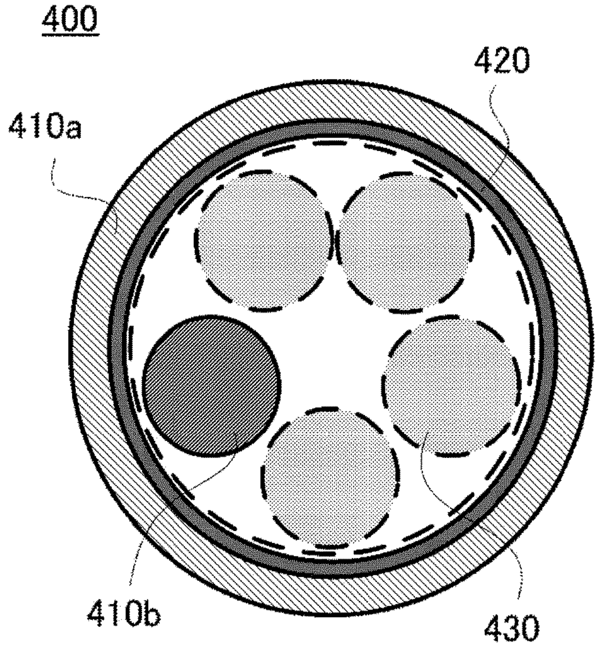
400
420
410a
410b
430

FIG.13

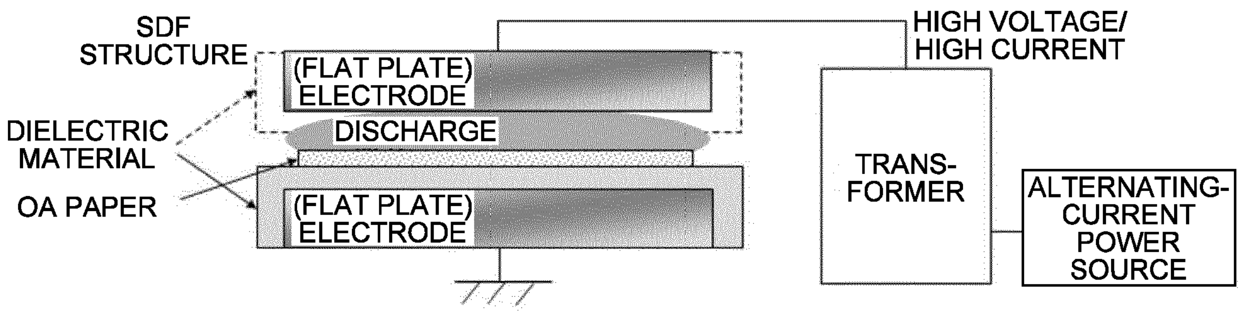
SDF
STRUCTURE
(FLAT PLATE)
ELECTRODE
DIELECTRIC
MATERIAL
DISCHARGE
OA PAPER
(FLAT PLATE)
ELECTRODE
HIGH VOLTAGE/
HIGH CURRENT
TRANS-
FORMER
ALTERNATING-
CURRENT
POWER
SOURCE

FIG.14

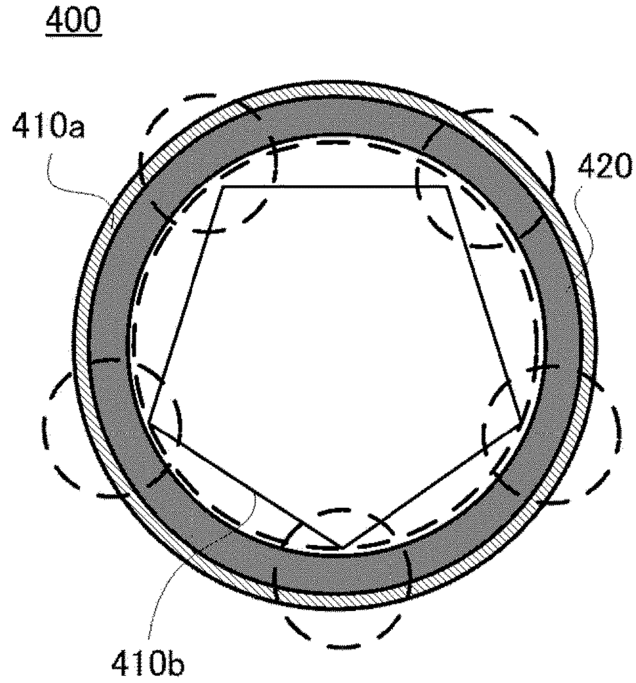


FIG.15

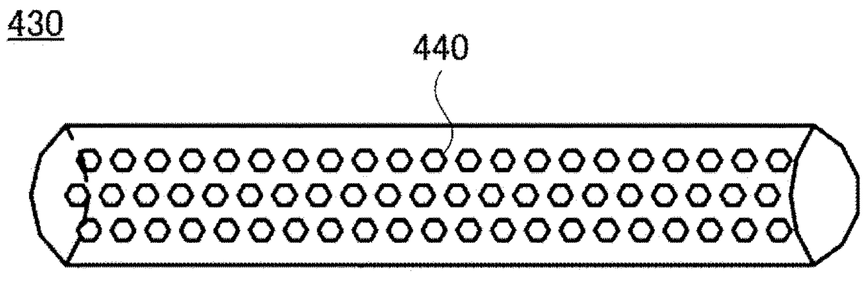

FIG.16

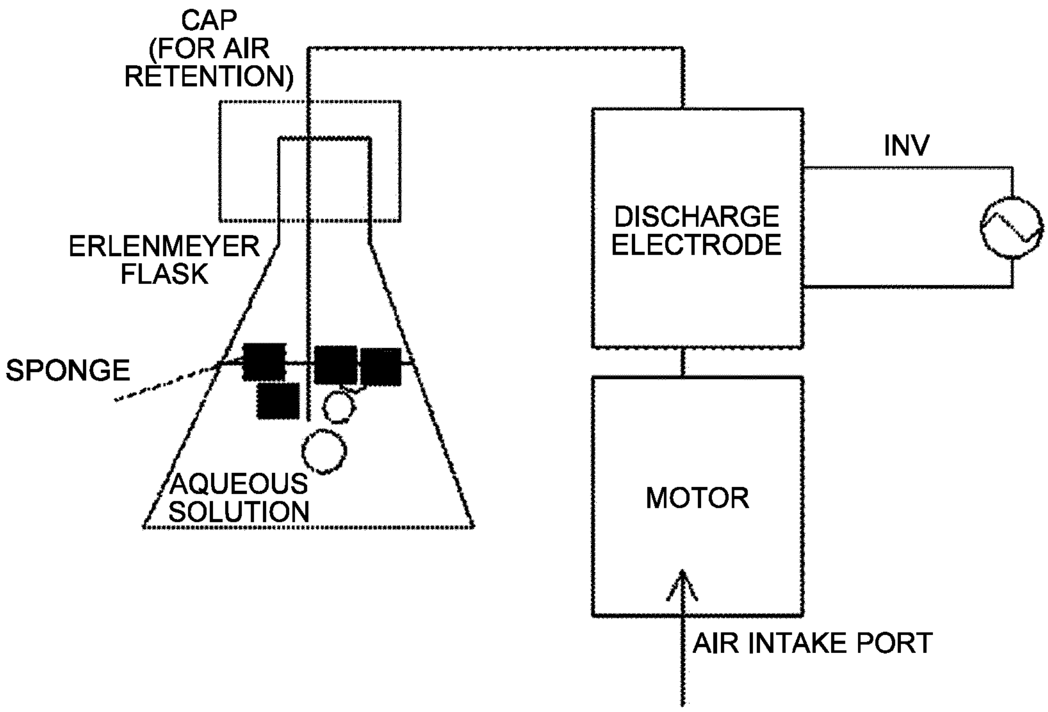
CAP
(FOR AIR
RETENTION)
ERLENMEYER
FLASK
SPONGE
AQUEOUS
SOLUTION
DISCHARGE
ELECTRODE
INV
MOTOR
AIR INTAKE PORT

FIG.17

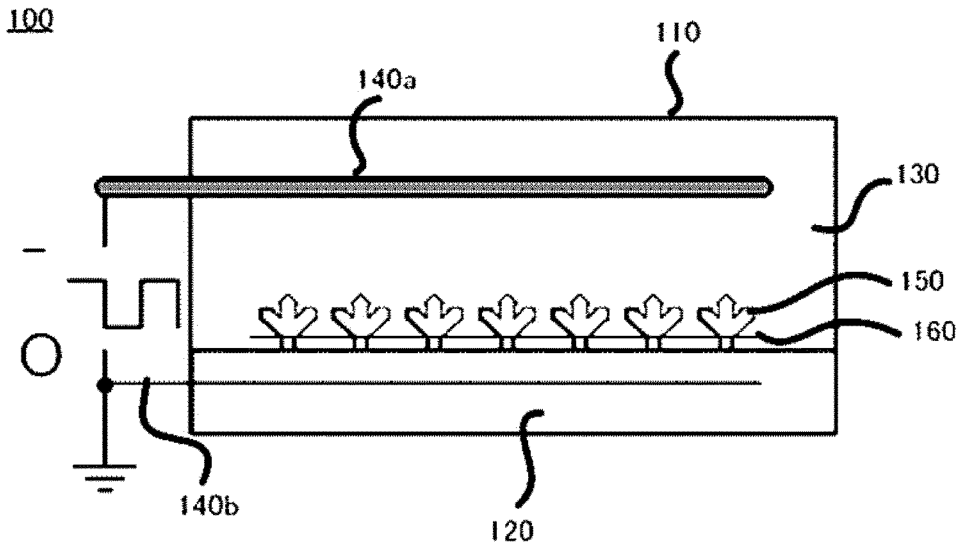
100
110
140a
130
150
160
140b
120

FIG.18A

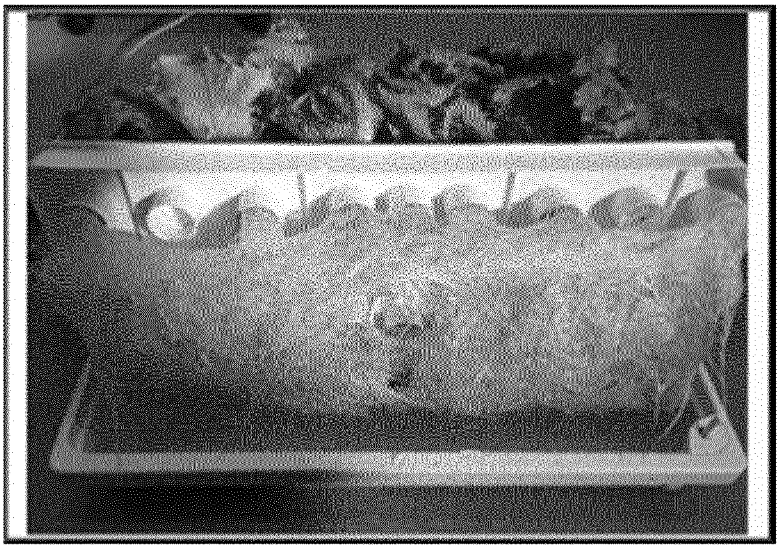

FIG.18B

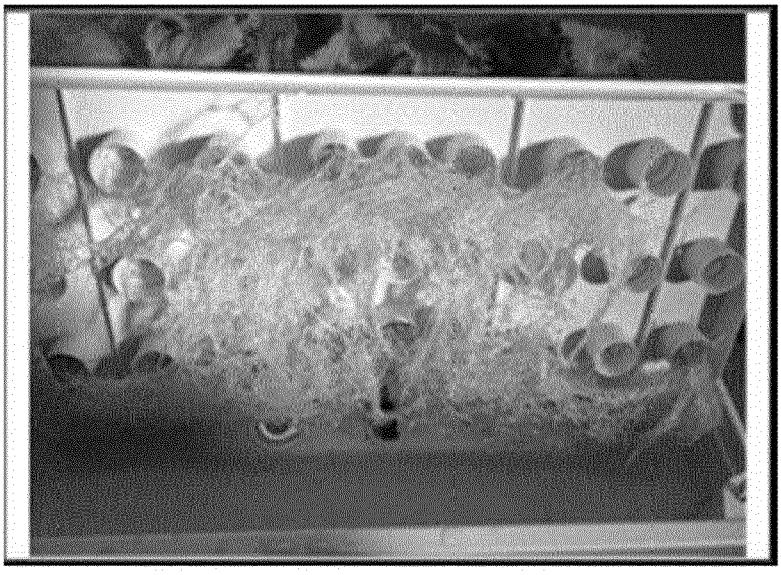

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017228423 A
- JP 2004187540 A
- JP 2010186984 A
- JP 2011057442 A
- JP 2012133206 A
- JP 2012191828 A